# EUROPEAN PATENT APPLICATION

(11) **EP 4 819 121 A1**
(43) Date of publication of application: **07.10.2026**
(21) Application number: 24920678.0
(22) Date of filing: 11.09.2024
(51) Int. Cl.: G09G 3/34

(54) **DISPLAY APPARATUS AND LIGHT SOURCE APPARATUS THEREOF**

(30) Priority: 22.01.2024 KR 20240009811
(71) Applicant: Samsung Electronics Co., Ltd., Suwon-si, Gyeonggi-do 16677 (KR)
(72) Inventor: KIM, Myungjoon, Suwon-si Gyeonggi-do 16677 (KR); KIM, Sungyeol, Suwon-si Gyeonggi-do 16677 (KR); KIM, Sujin, Suwon-si Gyeonggi-do 16677 (KR); KIM, Hyungjin, Suwon-si Gyeonggi-do 16677 (KR); SHIN, Seungyong, Suwon-si Gyeonggi-do 16677 (KR); JUNG, Yongmin, Suwon-si Gyeonggi-do 16677 (KR)
(74) Representative: Appleyard Lees IP LLP
(86) International application number: PCT/KR2024/013781
(87) International publication number: WO 2025/159262

(57) **Abstract**

The display apparatus includes an image display unit and a light source apparatus. The light source apparatus includes: a substrate including a substrate body extending along a first direction and a plurality of substrate bars extending in a second direction from the substrate body and spaced apart from each other along the first direction; a plurality of light sources provided on the substrate body and the plurality of substrate bars and provided to emit light toward the image display unit; a plurality of dimming blocks including at least one light source among the plurality of light sources; a plurality of driving elements which are provided only on the substrate body among the substrate body and the plurality of substrate bars, and drive the plurality of dimming blocks; and a signal line formed on the substrate body and connected to the plurality of driving elements. The signal line includes a data line for transmitting a data signal to the plurality of driving elements, a scan line for transmitting a scan signal to the plurality of driving elements, and a power line for supplying power to the plurality of driving elements.

## Description

### [Technical Field]

The present disclosure relates to a display apparatus and a light source apparatus thereof.

### [Background Art]

A display apparatus is a kind of an output apparatus that converts obtained or stored electrical information into visual information and displays the visual information to a user, and the display apparatus is used in various fields, such as home or workplace.

The display apparatus includes a monitor apparatus connected to a personal computer or a server computer, a portable computer device, a navigation terminal device, a general television apparatus, an Internet Protocol television (IPTV), a portable terminal device, such as a smart phone, a tablet PC, a personal digital assistant (PDA) or a cellular phone, various display apparatuses used to reproduce images, such as advertisements or movies in an industrial field, or various kinds of audio/video systems.

The display apparatus includes a light source apparatus to convert electrical information into visual information. The light source apparatus includes a plurality of light sources to independently emit light.

Each of the plurality of light sources includes a light emitting diode (LED) or an organic light emitting diode (OLED).

The light source apparatus of the display apparatus utilizes local dimming technology to enhance image contrast. The plurality of light sources may be divided into a plurality of dimming blocks, and a driving element may control a driving current supplied to the light sources contained in one or more dimming blocks.

The driving elements and light sources (for example, light emitting diodes) may be mounted on a substrate using a surface mount technology (SMT).

Recently, a large number of driving elements and light sources are being used to achieve a high contrast ratio, which requires a large number of traces on the substrate.

### [Disclosure]

### [Technical Problem]

The present disclosure is directed to providing a display apparatus that may simplify input traces by disposing the input traces, which are formed on a substrate including an improved structure that may reduce a product cost and a manufacturing cost, in a wide space, and a light source apparatus thereof.

Additional aspects of the disclosure will be set forth in part in the description which follows and, in part, will be obvious from the description, or may be learned by practice of the disclosure.

### [Technical Solution]

One aspect of the present disclosure provides a display apparatus including: an image display portion; and a light source apparatus. The light source apparatus includes: a substrate including a substrate body extending along a first direction, and a plurality of substrate bars extending in a second direction from the substrate body and spaced apart from each other along the first direction; a plurality of light sources provided on the substrate body and the plurality of substrate bars and configured to emit light toward the image display portion; a plurality of dimming blocks including at least one light source among the plurality of light sources; a plurality of driving elements provided on only the substrate body among the substrate body and the plurality of substrate bars, and configured to drive the plurality of dimming blocks; and a signal line formed on the substrate body and connected to the plurality of driving elements. The signal line includes: a data line is configured to transmit a data signal to the plurality of driving elements; a scan line is configured to transmit a scan signal to the plurality of driving elements; and a power line is configured to supply power to the plurality of driving elements.

Another aspect of the present disclosure provides a light source apparatus including: a substrate including a substrate body extending along a first direction, and a plurality of substrate bars extending in a second direction from the substrate body and spaced apart from each other along the first direction; a plurality of light sources provided on the substrate body and the plurality of substrate bars; a plurality of dimming blocks including at least one light source among the plurality of light sources; a plurality of driving elements provided on only the substrate body among the substrate body and the plurality of substrate bars, and configured to drive the plurality of dimming blocks; and a signal line formed on the substrate body and connected to the plurality of driving elements. The signal line includes: a data line is configured to transmit a data signal to the plurality of driving elements; a scan line is configured to transmit a scan signal to the plurality of driving elements; and a power line is configured to supply power to the plurality of driving elements.

### [Description of Drawings]

FIG. 1 is a view illustrating a display apparatus according to an embodiment of the present disclosure.
FIG. 2 is an exploded view of the display apparatus according to an embodiment of the present disclosure.
FIG. 3 is a cross-sectional view illustrating a display panel of the display apparatus according to an embodiment of the present disclosure.
FIG. 4 is an enlarged view of a light source and a reflective sheet of the display apparatus according to an embodiment of the present disclosure.
FIG. 5 is a view illustrating a substrate and a bottom chassis of the display apparatus according to an embodiment of the present disclosure.
FIG. 6 is an enlarged view of a portion of the substrate and the bottom chassis of the display apparatus according to an embodiment of the present disclosure.
FIG. 7 is an enlarged view of a portion of the substrate of the display apparatus according to an embodiment of the present disclosure.
FIG. 8 is an enlarged view of a portion of the substrate of the display apparatus according to an embodiment of the present disclosure, illustrating sizes of protruding portion and recess region.
FIG. 9 is an enlarged view of a portion of an example of a light source apparatus of the display apparatus according to an embodiment of the present disclosure.
FIG. 10 is an enlarged view of a portion of another example of a light source apparatus of a display apparatus according to an embodiment of the present disclosure.
FIG. 11 is a view illustrating a signal line of a trace connected to driving elements of an example of the light source apparatus of the display apparatus according to an embodiment of the present disclosure.
FIG. 12 is a view illustrating a control line of the trace connected to the driving elements of an example of the light source apparatus of the display apparatus according to an embodiment of the present disclosure.
FIG. 13 is a view illustrating a signal line connected to driving elements of another example of a light source apparatus of a display apparatus according to an embodiment of the present disclosure.
FIG. 14 is a view illustrating a trace width of the control line connected to the driving elements of the light source apparatus of the display apparatus according to an embodiment of the present disclosure.
FIG. 15 is a control block diagram of the display apparatus according to an embodiment of the present disclosure.
FIG. 16 is a view illustrating an example of a connection structure of a dimming driver, the driving element, and a dimming block of the display apparatus according to an embodiment of the present disclosure.
FIG. 17 is a view illustrating an example of the connection structure of the driving element and the dimming block of the light source apparatus of the display apparatus according to an embodiment of the present disclosure.
FIG. 18 is a view illustrating an example of a connection structure of a driving element and a dimming block of a display apparatus according to another embodiment of the present disclosure.
FIG. 19 is a simplified view of the connection structure of the driving element and the dimming block illustrated in FIG. 18.
FIG. 20 is a view illustrating an example of a connection structure of a driving element and a dimming block of a display apparatus according to another embodiment of the present disclosure.
FIG. 21 is a simplified view of the connection structure of the driving element and the dimming block illustrated in FIG. 20.

### [Modes of the Invention]

The various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

Terms such as "unit", "module", and "member" may be embodied as hardware or software. According to embodiments, a plurality of "unit", "module", and "member" may be implemented as a single component or a single "unit", "module", and "member" may include a plurality of components.

Also, the terms used herein are used to describe the embodiments and are not intended to limit and / or restrict the disclosure. The singular forms "a," "an" and "the" are intended to include the plural forms as well, unless the context clearly indicates otherwise. In this disclosure, the terms "including", "having", and the like are used to specify features, numbers, steps, operations, elements, components, or combinations thereof, but do not preclude the presence or addition of one or more of the features, numbers, steps, operations, elements, components, or combinations thereof.

It will be understood that, although the terms first, second, third, and the like may be used herein to describe various elements, but elements are not limited by these terms. These terms are only used to distinguish one element from another element. For example, without departing from the scope of the disclosure, a first element may be termed as a second element, and a second element may be termed as a first element. The term of "and / or" includes a plurality of combinations of relevant items or any one item among a plurality of relevant items.

When an element (e.g., a first element) is referred to as being "(functionally or communicatively) coupled," or "connected" to another element (e.g., a second element), the first element may be connected to the second element, directly (e.g., wired), wirelessly, or through a third element.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

The terms "up and down direction", "front and rear direction", and the like used in the following description are defined based on the drawings, and the shape and position of each component are not limited by these terms. For example, the terms "front" and "rear" below may be defined based on a X direction shown in the drawings, respectively. The terms "upper" and "lower" below may be defined based on a Z direction shown in the drawings, respectively. The terms "left direction" and "right direction" below may be defined based on a Y direction shown in the drawings, respectively. The term "vertical direction" below may mean the Z direction shown in the drawings, respectively, and the term "horizontal direction" below may mean the Y direction shown in the drawings, respectively.

Hereinafter exemplary embodiments of the present disclosure will be described in detail with reference to the accompanying drawings.

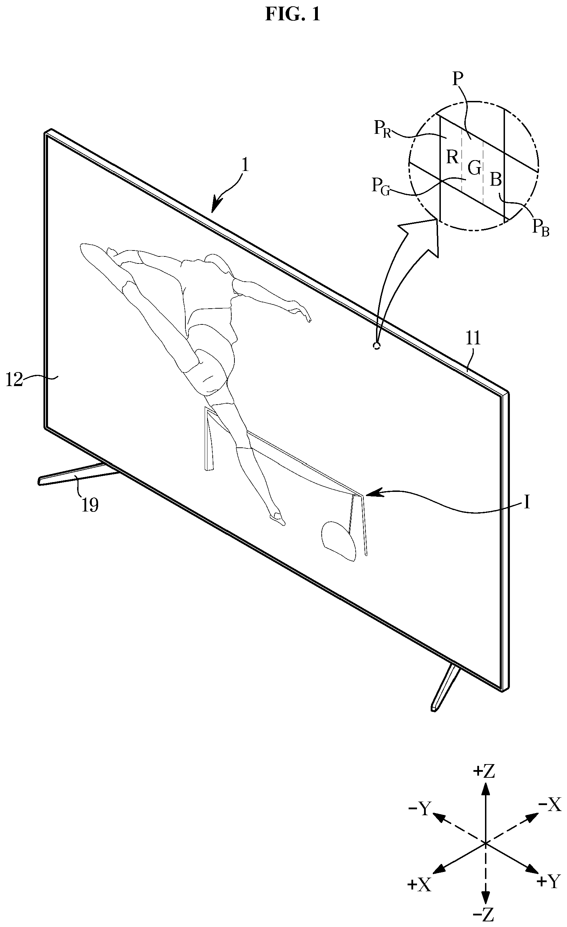

FIG. 1 is a view illustrating a display apparatus according to an embodiment of the present disclosure.

Referring to FIG. 1, a display apparatus 1 according to an embodiment of the present disclosure is a device that processes an image signal received from an outside and visually displays the processed image. FIG. 1 illustrates a case in which the display apparatus 1 is a television is exemplified, but the present disclosure is not limited thereto. For example, the display apparatus 1 may be implemented in various forms, such as a monitor, a portable multimedia device, and a portable communication device, which are a type of computer output device, and the display apparatus 1 is not limited to the type thereof as long as the display apparatus is configured to visually display an image.

The display apparatus 1 may be a large format display (LFD) installed outdoors, such as a roof of a building or a bus stop. The outdoor is not limited to the outside of a building, and thus the display apparatus 1 according to an embodiment may be installed in any places as long as the display apparatus is accessed by a large number of people, even indoors, such as subway stations, shopping malls, movie theaters, companies, and stores.

FIG. 1 illustrates a flat display apparatus with a flat screen as an example of the display apparatus 1, but the present disclosure is not limited thereto. Therefore, the display apparatus according to the present disclosure may be applied to a curved display apparatus or a bendable or flexible display apparatus in which a flat state and a curved state are variable. Further, a configuration of the present disclosure may be applied to display apparatus of various shapes regardless of a screen size or ratio of the display apparatus.

The display apparatus 1 may receive content data including video signals and audio signals from various content sources and output video and audio sound corresponding to the video signals and the audio signals. For example, the display apparatus 1 may receive content data through a broadcast reception antenna or cable, receive content data from a content playback device, or receive content data from a content providing server of a content provider.

The display apparatus 1 may display an image corresponding to video data and output sound corresponding to audio data. For example, the display apparatus 1 may restore a plurality of image frames included in video data and continuously display the plurality of image frames. Further, the display apparatus 1 may restore an audio signal included in the audio data and continuously output sound according to the audio signal

As illustrated in FIG. 1, the display apparatus 1 may include a main body 11, and a screen 12 provided to display an image I.

The display apparatus 1 may be installed on an indoor or outdoor floor or furniture in a standing manner, or may be installed on a wall or inside a wall in a wall-mounted manner. For example, the display apparatus 1 may include a support leg 19 provided in a lower portion of the main body 11 to be installed on the indoor or outdoor floor or furniture in the standing manner.

The main body 11 may form an appearance of the display apparatus 1. A component configured to allow the display apparatus 1 to display the image I and to perform various functions may be provided in the main body 11.

The display apparatus 1 may be configured to display the image I. Particularly, the screen 12 may be formed on a front surface of the main body 11, and the display apparatus 1 may display the image I on the screen 12. For example, the screen 12 may display a still image or a moving image. Further, the screen 12 may display a two-dimensional plane image or a three-dimensional image using binocular parallax of the user.

A plurality of pixels P may be formed on the screen 12. The image I displayed on the screen 12 may be formed by a combination of the lights emitted from the plurality of pixels P. For example, the image I may be formed on the screen 12 by combining light emitted from the plurality of pixels P as a mosaic.

Each of the plurality of pixels P may emit different brightness and different color of light. Particularly, the plurality of pixels P may include sub-pixels P_{R}, P_{G}, and P_{B}, respectively, and the sub-pixels P_{R}, P_{G}, and P_{B} may include a red sub pixel P_{R} emitting red light, a green sub pixel P_{G} emitting green light, and a blue sub pixel P_{B} emitting blue light. For example, the red light may represent a light beam having a wavelength of approximately 620 nm (nanometers, one billionth of a meter) to 750 nm, the green light may represent a light beam having a wavelength of approximately 495 nm to 570 nm, and the blue light may represent a light beam having a wavelength of approximately 450 nm to 495 nm.

By combining the red light of the red sub pixel P_{R}, the green light of the green sub pixel P_{G} and the blue light of the blue sub pixel P_{B}, each of the plurality of pixels P may emit different brightness and different color of light.

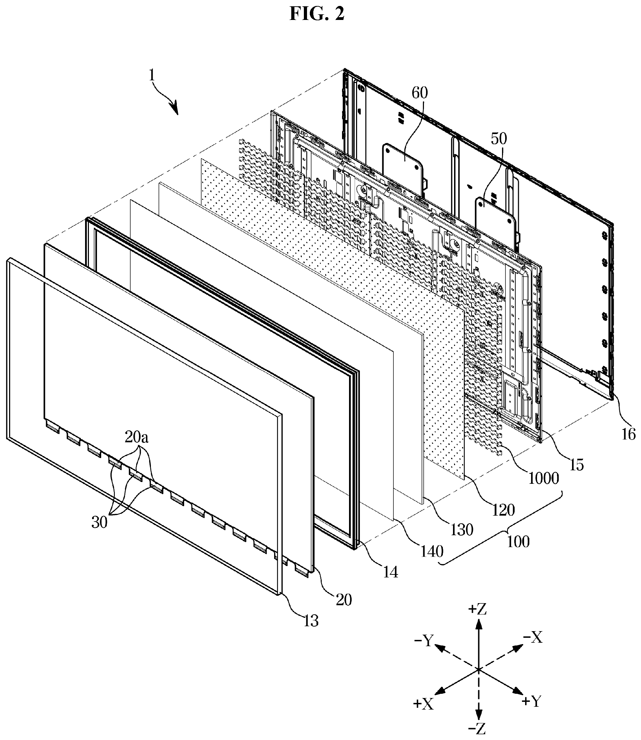

FIG. 2 is an exploded view of the display apparatus according to an embodiment of the present disclosure.

Referring to FIG. 2, various components for generating an image I on the screen 12 may be disposed inside the main body 11 of the display apparatus 1 according to an embodiment of the present disclosure.

For example, the display apparatus 1 may include a display panel 20. The display panel 20 may be disposed in the main body 11. The display panel 20 may include an image display portion provided to display the image I. The screen 12 described in FIG. 1 may be formed on a front surface of the display panel 20.

For example, the display panel 20 may have a substantially rectangular shape. Particularly, the display panel 20 may have a shape in which a length of the horizontal side and a length of the vertical side are different from each other. That is, the display panel 20 may be provided to have a long side and a short side. The display panel 20 may be provided in a rectangular plate shape. However, the present disclosure is not limited thereto, and the display panel 20 may be provided in the shape of a square plate in which the lengths of the long and short sides are approximately equal.

The display panel 20 may be provided in various sizes. A ratio between the long side and the short side of the display panel 20 is not limited to general cases such as 16:9 and 4:3, but may be provided at any ratio.

In the display apparatus 1 according to an embodiment of the present disclosure, the display panel 20 may be composed of a non-self luminous display such as a liquid crystal display (LCD).

A cable 20a configured to transmit image data to the display panel 20, and a display driver integrated circuit (DDI) (hereinafter referred to as 'panel driver') 30 configured to process digital image data and output an analog image signal may be provided at one side of the display panel 20.

The cable 20a may electrically connect a control assembly 50/ a power assembly 60 to the panel driver 30, and may also electrically connect the panel driver 30 to the display panel 20. The cable 20a may include a flexible flat cable or a film cable that is bendable.

The panel driver 30 may receive image data and power from the control assembly 50/ the power assembly 60 through the cable 20a. The panel driver 30 may provide the image data and driving current to the display panel 20 through the cable 20a.

In addition, the cable 20a and the panel driver 30 may be integrally implemented as a film cable, a chip on film (COF), or a tape carrier package (TCP). In other words, the panel driver 30 may be arranged on the cable 20b. However, the present disclosure is not limited thereto, and the panel driver 30 may be arranged on the display panel 20.

A structure of the display panel 20 will be described in detail.

The display apparatus 1 may include a backlight unit 100 configured to emit light toward the display panel 20. The backlight unit 100 may be disposed in the main body 11. The backlight unit 100 may be arranged at the rear of the display panel 20 to emit light toward the front where the display panel 20 is located. Particularly, the backlight unit 100 may be composed of surface light source. The display panel 20 may block or pass light emitted from the backlight unit 100.

The backlight unit 100 may include a point light source configured to emit monochromatic light or white light. The backlight unit 100 may refract, reflect, and scatter light in order to convert light, which is emitted from the point light source, into uniform surface light. The backlight unit 100 may refract, reflect, and scatter light emitted from the point light source, thereby emitting uniform surface light toward the front side.

As illustrated in FIG. 2, the backlight unit 100 may include a light source apparatus 1000. The light source apparatus 1000 may generate and emit light. Particularly, the light source apparatus 1000 may be configured to emit monochromatic light or white light.

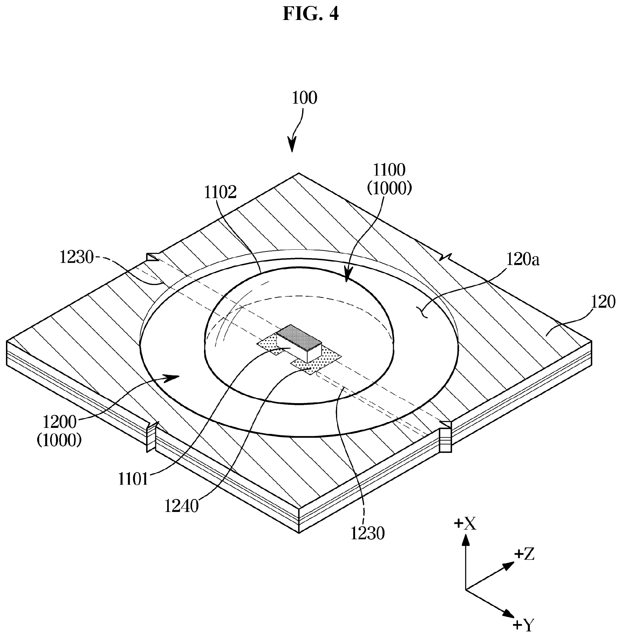

The light source apparatus 1000 may include a plurality of light sources 1100 configured to emit light, and a substrate 1200 on which the plurality of light sources 1100 is mounted (refer to FIG. 4, and the like).

The light source apparatus 1000 will be described in detail.

As illustrated in FIG. 2, the backlight unit 100 may include a reflective sheet 120 provided to reflect light. The reflective sheet 120 may reflect light forward or in a direction close to the front.

For example, the reflective sheet 120 may be attached to a front surface of the light source apparatus 1000. The reflective sheet 120 may be attached to a front surface of the substrate 1200.

For example, in front of the reflective sheet 120, the light source apparatus 1000 (particularly, the light source 1100 of the light source apparatus 1000, refer to FIG. 4) may emit light in various directions. The light emitted from the light source apparatus 1000 may not only be emitted toward a diffuser plate 130, which will be described later, but may also be emitted from the light source apparatus 1000 toward the reflective sheet 120. The reflective sheet 120 may reflect the light, which is emitted toward the reflective sheet 120, toward the diffuser plate 130.

Further, while the light emitted from the light source apparatus 1000 passes through various objects such as the diffuser plate 130 and an optical sheet 140, a portion of the light may be reflected from a surface of the diffuser plate 130 and the optical sheet 140. The reflective sheet 120 may reflect the light, which is reflected by the above-mentioned reason, forward again.

As illustrated in FIG. 2, the backlight unit 100 may include the diffuser plate 130 provided to uniformly diffuse light. The diffuser plate 130 may be provided in front of the light source apparatus 1000 and the reflective sheet 120. The diffuser plate 130 may evenly disperse the light emitted from the light source apparatus 1000 and then emit the light forward.

As illustrated in FIG. 2, the backlight unit 100 may include the optical sheet 140 provided to further improve the luminance and uniformity of the emitted light. The optical sheet 140 may be provided to refract and scatter light emitted from the front surface of the diffuser plate 130. For example, the optical sheet 140 may include various types of sheets, such as a diffusion sheet, a prism sheet, a reflective polarizing sheet, and a quantum dot sheet.

The display apparatus 1 may include the control assembly 50 configured to control the operation of the backlight unit 100 and the display panel 20, and the power assembly 60 configured to supply power to the backlight unit 100 and the display panel 20. The control assembly 50 and the power assembly 60 may be disposed in the main body 11.

For example, the control assembly 50 may include a control circuit configured to control an operation of the display panel 20 and the backlight unit 100. The control circuit may process image data received from an external content source. The control circuit may transmit image data to the display panel 20, and transmit dimming data to the backlight unit 100.

For example, the power assembly 60 may include a power circuit configured to supply power to the display panel 20 and the backlight unit 100. The power circuit may supply power to the control assembly 50, the backlight unit 100, and the display panel 20.

The control assembly 50 and the power assembly 60 may be implemented as a printed circuit board and various circuits mounted on the printed circuit board. For example, the power circuit may include a capacitor, a coil, a resistance element, a processor, and a power circuit board on which the capacitor, the coil, the resistance element, and the processor are mounted. Further, the control circuit may include a memory, a processor, and a control circuit board on which the memory and the processor are mounted.

The display apparatus 1 may include a display case provided to support various components of the main body 11 of the display apparatus 1. In other words, various components of the main body 11 may be accommodated inside the display case. The display case may form the external appearance of the display apparatus 1.

For example, the display case may support the display panel 20. For example, the display case may support the backlight unit 100. For example, the display case may support the control assembly 50. For example, the display case may support the power assembly 60.

For example, the display apparatus 1 may include a top chassis 13. The top chassis 13 may include a top chassis 13 provided to support a front or side surface of the display panel 20. For example, the top chassis 13 may be provided in a shape of an approximately rectangular frame.

The top chassis 13 may form a bezel that is positioned to face the front of the display apparatus 1 and support the front surface of the display panel 20. However, when the display apparatus 1 is a bezel-less type display apparatus with a very narrow or no bezel, the top chassis 13 may be provided to support only the side surface of the display panel 20. Alternatively, when a bottom chassis 15 supports the side surface of the display panel 20, the display apparatus 1 may not include the top chassis 13.

For example, the display apparatus 1 may include the bottom chassis 15. The bottom chassis 15 may cover a rear side of the display panel 20. The bottom chassis 15 may be coupled to a rear side of the top chassis 13. The bottom chassis 15 may support various components of the display apparatus 1, such as the backlight unit 100, the control assembly 50, and the power assembly 60.

The bottom chassis 15 may be formed to have a substantially flat plate shape, but is not limited thereto. The bottom chassis 15 may be formed of a material with high thermal conductivity to dissipate heat generated from the light source 1100 to the outside. For example, the bottom chassis 15 may be formed of a metal material such as aluminum or SUS, or a plastic material such as ABS.

For example, the display apparatus 1 may include a middle mold 14. The middle mold 14 may be arranged between the top chassis 13 and the bottom chassis 15. For example, the middle mold 14 may support at least some components of the backlight unit 100.

For example, the display apparatus 1 may include a rear cover 16. The rear cover 16 may be disposed at a rear side of the bottom chassis 15 and provided to cover the bottom chassis 15 and various components mounted on the rear of the bottom chassis 15 (for example, the control assembly 50, and the power assembly 60).

Meanwhile, unlike as shown in FIG. 2, the display case of the display apparatus 1 according to the present disclosure may not include some of the components of the top chassis, middle mold, bottom chassis, and rear cover.

The configuration of the display apparatus 1 described above with reference to FIG. 2 is merely an example for describing the display apparatus according to the present disclosure, and the present disclosure is not limited thereto. The display apparatus according to the present disclosure may be provided to include various configurations for performing the function of providing images through a screen.

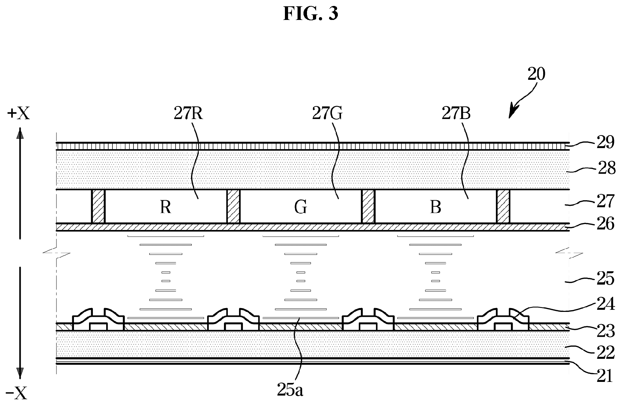

FIG. 3 is a cross-sectional view illustrating a display panel of the display apparatus according to an embodiment of the present disclosure.

Referring to FIG. 3, the display panel 20 included in the display apparatus 1 according to an embodiment of the present disclosure may be composed of a liquid crystal display (LCD) panel, and configured to block or transmit light emitted from the backlight unit 100. The image I may be formed in front of the display panel 20 by an operation in which the display panel 20 blocks or transmits the light emitted from the backlight unit 100.

The front surface of the display panel 20 may form the screen 12 of the display apparatus 1 described above, and the plurality of pixels P may be provided in the display panel 20. In the display panel 20, the plurality of pixels P may independently block or transmit light of the backlight unit 100, and the light transmitted through the plurality of pixels P may form the image I displayed on the screen 12.

For example, as shown in FIG. 3, the display panel 20 may include a first polarizing film 21, a first transparent substrate 22, a pixel electrode 23, a thin film transistor 24, a liquid crystal layer 25, a common electrode 26, a color filter 27, a second transparent substrate 28, and a second polarizing film 29.

The first transparent substrate 22 and the second transparent substrate 28 may fixedly support the pixel electrode 23, the thin film transistor 24, the liquid crystal layer 25, the common electrode 26, and the color filter 27. The first and second transparent substrates 22 and 28 may be formed of tempered glass or transparent resin.

The first polarizing film 21 and the second polarizing film 29 may be provided on the outside of the first and second transparent substrates 22 and 28.

Each of the first polarizing film 21 and the second polarizing film 29 may transmit a specific light beam and block other light beams. For example, the first polarizing film 21 may transmit a light beam having a magnetic field vibrating in a first direction and block other light beams. In addition, the second polarizing film 29 may transmit a light beam having a magnetic field vibrating in a second direction and block other light beams. In this case, the first direction and the second direction may be perpendicular to each other. Accordingly, a polarization direction of the light transmitted through the first polarizing film 21 and a vibration direction of the light transmitted through the second polarizing film 29 may be perpendicular to each other. As a result, generally, light may not pass through the first polarizing film 21 and the second polarizing film 29 at the same time.

The color filter 27 may be provided on an inner side of the second transparent substrate 28.

The color filter 27 may include a red filter 27R transmitting red light, a green filter 27G transmitting green light, and a blue filter 27B transmitting blue light. The red filter 27R, the green filter 27G, and the blue filter 27B may be disposed in parallel with each other. A region, in which the color filter 27 is formed, may correspond to the pixel P described above. A region, in which the red filter 27R is formed, may correspond to the red sub-pixel P_{R}, a region, in which the green filter 27G is formed, may correspond to the green sub-pixel P_{G}, and a region, in which the blue filter 27B is formed, may correspond to the blue sub-pixel P_{B}.

The pixel electrode 23 may be provided on an inner side of the first transparent substrate 22, and the common electrode 26 may be provided on an inner side of the second transparent substrate 28.

The pixel electrode 23 and the common electrode 26 may be formed of a metal material through which electricity is conducted, and the pixel electrode 23 and the common electrode 26 may generate an electric field to change the arrangement of liquid crystal molecules 25a forming the liquid crystal layer 25 to be described below.

The pixel electrode 23 and the common electrode 26 may be formed of a transparent material, and may transmit light incident from the outside. For example, the pixel electrode 23 and the common electrode 26 may include indium tin oxide (ITO), indium zinc oxide (IZO), silver nanowire (Ag nano wire), carbon nanotube (CNT), graphene, or poly (3,4-ethylenedioxythiophene) (PEDOT). The thin film transistor (TFT) 24 may be provided in an inner side of the second transparent substrate 28.

The TFT 24 may transmit or block a current flowing through the pixel electrode 23. For example, an electric field may be formed or removed between the pixel electrode 23 and the common electrode 26 in response to turning on (closing) or turning off (opening) the TFT 24.

The TFT 24 may be formed of poly-silicon, and may be formed by semiconductor processes, such as lithography, deposition, and ion implantation.

The liquid crystal layer 25 may be formed between the pixel electrode 23 and the common electrode 26, and the liquid crystal layer 25 may be filled with the liquid crystal molecules 25a.

Liquid crystals represent an intermediate state between a solid (crystal) and a liquid. Most of the liquid crystal materials are organic compounds, and the molecular shape is in the shape of an elongated rod, and the orientation of molecules is in an irregular state in one direction, but in a regular state in other directions. As a result, the liquid crystal has both the fluidity of the liquid and the optical anisotropy of the crystal (solid).

In addition, liquid crystals also exhibit optical properties according to changes in an electric field. For example, in the liquid crystal, the orientation of molecules forming the liquid crystal may change according to a change in an electric field. When an electric field is generated in the liquid crystal layer 25, the liquid crystal molecules 25a of the liquid crystal layer 25 may be disposed along the direction of the electric field. When the electric field is not generated in the liquid crystal layer 25, the liquid crystal molecules 25a may be disposed irregularly or disposed along an alignment layer (not shown). As a result, the optical properties of the liquid crystal layer 25 may vary depending on the presence or absence of the electric field passing through the liquid crystal layer 25.

The structure of the display panel 20 described above with reference to FIG. 3 is only an example of a structure of the display panel of the display apparatus according to the present disclosure, and the present disclosure is not limited thereto.

FIG. 4 is an enlarged view of a light source and a reflective sheet of the display apparatus according to an embodiment of the present disclosure.

Referring to FIG. 4, the display apparatus 1 according to an embodiment of the present disclosure may include the plurality of light sources 1100 and the substrate 1200 on which the light sources 1100 are mounted. The plurality of light sources 1100 and the substrate 1200 may form the light source apparatus 1000 of the backlight unit 100.

FIG. 4 illustrates one light source 1100 among the plurality of light sources 1100 included in the light source apparatus 1000, and a description of a structure and function of the light source 1100 described below with reference to FIG. 4 may be commonly applied to each of the plurality of light sources 1100.

The light source 1100 may be configured to emit light. The light source 1100 may be configured to emit light toward the display panel 20. The light source 1100 may employ an element configured to emit monochromatic light (light of a specific wavelength, for example, blue light) or white light (for example, light of a mixture of red light, green light, and blue light) in various directions by receiving power. For example, the light source 111 may include a light emitting diode (LED).

The substrate 1200 may fix the plurality of light sources 1100 to prevent a change in the position of the light source 1100. Further, the substrate 1200 may supply power, which is for the light source 1100 to emit light, to the light source 1100.

The substrate 1200 may fix the plurality of light sources 1100 and may be configured with synthetic resin or tempered glass or a printed circuit board (PCB) on which a conductive power supply line for supplying power to the light source 1100 is formed.

According to various embodiments, the substrate 1200 may include multi-layer PCB including a plurality of layers.

According to various embodiments, the substrate 1200 may be a single-sided PCB including a single layer.

Various signal lines (trace) for controlling the light source 1100 may be formed on the substrate 1200.

The light source 1100 may be disposed on the front surface of the substrate 1200. The front surface of the substrate 1200 may refer to one surface of the substrate 1200 facing the display panel 20. That is, the light source 1100 may be mounted on the substrate 1200 to face forward and emit light forward.

The reflective sheet 120 may be disposed in front of the substrate 1200. As described above, the reflective sheet 120 may be coupled to the front surface of the substrate 1200. At this time, the reflective sheet 120 may include a plurality of through-holes 120a formed at positions corresponding to each of the plurality of light sources 1100 of the light source apparatus 1000. As shown in FIG. 4, the light source 1100 may pass through the through-hole 120a and protrude toward the front of the reflective sheet 120. As a result, the light source 1100 and a portion of the substrate 1200 may be exposed toward the front of the reflective sheet 120 through the through-hole 120a. With this configuration, the light source 1100 may emit light in front of the reflective sheet 120.

The reflective sheet 120 may reflect light, which is emitted from the light source 1100 toward the reflective sheet 120, toward the diffuser plate 130.

A process, in which the light emitted from the plurality of light sources 1100 or the light reflected by the reflective sheet 120 travels toward the display panel 20, is as described above.

Hereinafter a structure of the light source 1100 and the substrate 1200 will be described.

The light source 1100 may include a light emitting diode 1101. The light emitting diode 1101 may include a P-type semiconductor and an N-type semiconductor for emitting light by recombination of holes and electrons. In addition, the light emitting diode 1101 may be provided with a pair of electrodes for supplying hole and electrons to the P-type semiconductor and the N-type semiconductor, respectively.

The light emitting diode 1101 may be configured to convert electrical energy into optical energy. The light emitting diode 1101 may emit light having a maximum intensity at a predetermined wavelength based on the supplied power. For example, the light emitting diode 1101 may emit blue light having a peak value at a wavelength indicating blue color (for example, a wavelength between 430 nm and 495 nm).

For example, a multilayer reflective structure, in which a plurality of insulation layers having different refractive indices is alternately laminated, may be provided on the front surface of the light emitting diode 1101. For example, the multilayer reflective structure may be provided with a Distributed Bragg Reflector (DBR).

For example, the light emitting diode 1101 may be directly attached to the substrate 1200 in a Chip On Board (COB) method. In other words, the light source 1100 may include the light emitting diode 1101 to which a light emitting diode chip or a light emitting diode die is directly attached to the substrate 1200 without an additional packaging.

The light source apparatus 1000 may be manufactured in such a way that the flip-chip type light emitting diode 1101 is attached to the substrate 1200 in a chip-on-board method. Accordingly, it is possible to reduce the size of the light source 1100.

The substrate 1200 may include a power trace 1230 provided to supply power to the light source 1100. The power trace 1230 may be provided to supply an electrical signal and/or power from the control assembly 50 and/or the power assembly 60 to the light source 1100. For example, the power trace 1230 may be provided to supply power to the flip chip type light emitting diode 1101.

For example, the substrate 1200 may be formed by alternately laminating an insulation layer that is non-conductive and a conduction layer that is conductive.

A line or pattern, through which power and/or electrical signals pass, may be formed on the conduction layer. The conduction layer may be formed of various materials having an electrical conductivity. For example, the conduction layer may be formed of various metal materials, such as copper (Cu), tin (Sn), aluminum (Al), or an alloy thereof.

A dielectric of the insulation layer of the substrate 1200 may insulate between lines or patterns of the conduction layer. The insulation layer may be formed of a dielectric for electrical insulation, such as FR-4.

For example, a protection layer configured to prevent or suppress damages caused by an external impact and/or damages caused by a chemical action (for example, corrosion, and the like) and/or damages caused by an optical action, to the substrate 1200 may be formed on an outer surface of the substrate 1200. For example, the protection layer of the substrate 1200 may include a photo solder resist (PSR).

The power trace 1230 may be covered by the protection layer of the substrate 1200, so as to be prevented from being exposed to the outside.

For example, the substrate 1200 may include a power supply pad 1240 provided to be electrically connected to the power trace 1230 to supply power to the flip chip type light emitting diode 1101. The power trace 1230 may be electrically connected to the light emitting diode 1101 through the power supply pad 1240.

For example, a window may be formed in the protection layer of the substrate 1200 to expose a portion of the power trace 1230 to the outside. The power supply pad 1240 may be electrically connected to a portion of the power trace 1230 exposed to the outside of the substrate 1200.

For example, various electrically conductive adhesive materials such as solder and electrically conductive epoxy adhesives may be applied between an electrode of the light emitting diode 1101 and the power supply pad 1240.

The light source 1100 may include an optical dome 1102. The optical dome 1102 may cover the light emitting diode 1101. The optical dome 1102 may prevent or suppress damages to the light emitting diode 1101 caused by an external mechanical action and/or damage to the light emitting diode 1101 caused by a chemical action.

The optical dome 1102 may have a dome shape formed in such a way that a sphere is cut into a surface not including the center thereof, or may have a hemispherical shape in such a way that a sphere is cut into a surface including the center thereof. A vertical cross section of the optical dome 1102 may be a bow shape or a semicircle shape.

The optical dome 1102 may be formed of silicone or epoxy resin. For example, the molten silicon or epoxy resin may be discharged onto the light emitting diode 1101 through a nozzle, and the discharged silicon or epoxy resin may be cured, thereby forming the optical dome 1102.

The optical dome 1102 may be optically transparent or translucent. Light emitted from the light emitting diode 1101 may be emitted to the outside by passing through the optical dome 1102.

In this case, the dome-shaped optical dome 1102 may refract light like a lens. For example, light emitted from the light emitting diode 1101 may be refracted by the optical dome 1102 and thus may be dispersed.

The structure of the light source apparatus 1000 such as the light source 1100 and the substrate 1200 described with reference to FIG. 4 is only an example of the structure of the light source module of the display apparatus according to the present disclosure, and the present disclosure is not limited thereto.

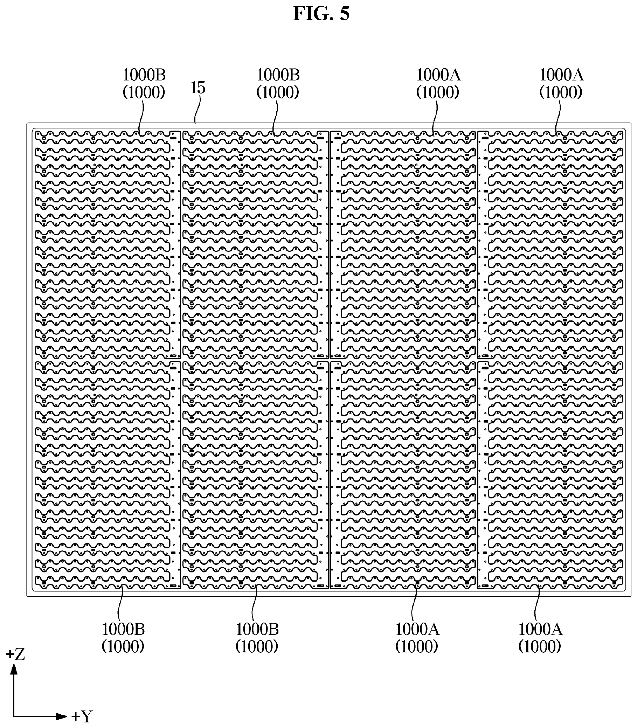

FIG. 5 is a view illustrating a substrate and a bottom chassis of the display apparatus according to an embodiment of the present disclosure.

Referring to FIG. 5, the display apparatus 1 according to an embodiment of the present disclosure may include a plurality of light source apparatuses 1000.

The plurality of light source apparatuses 1000 may be disposed in front (+X direction) of the bottom chassis 15. For example, the plurality of light source apparatuses 1000 may each be mounted on the bottom chassis 15. That is, the plurality of light source apparatuses 1000 may each be fixed to the bottom chassis 15 and may be supported by the bottom chassis 15.

For example, the plurality of light source apparatuses 1000 may be formed in shapes that correspond to each other. In other words, each of the plurality of light source apparatuses 1000 may have substantially the same structure.

For example, as shown in FIG. 5, a light source apparatus 1000A located on the right side (+Y direction side) of the display apparatus 1 among the plurality of light source apparatuses 1000 and a light source apparatus 1000B located on the left side (-Y direction side) of the display apparatus 1 among the plurality of light source apparatuses 1000 may be arranged to allow the vertical and horizontal directions to be opposite to each other (that is, rotated by 180 degrees about the X axis). According to this arrangement, the plurality of light source apparatuses 1000 may be arranged to be left and right symmetrical with respect to a horizontal center of the display apparatus 1, and provided to allow both sides of luminance to be uniform with respect to the horizontal center of the display apparatus 1.

As the plurality of light source apparatuses 1000 is designed to have almost the same shape as each other, waste of components may be prevented and efficiency of the manufacturing process may be improved, thereby reducing manufacturing cost.

However, the present disclosure is not limited thereto, and at least some of the plurality of light source apparatuses 1000 may be formed to have different shapes.

FIG. 5 illustrates an example in which the display apparatus 1 includes eight light source modules 1000, but the number of light source modules 1000 included in the display apparatus 1 is not limited to that shown in FIG. 5. For example, the number of light source modules 1000 included in the display apparatus 1 may be more or less than the number shown in FIG. 5. Alternatively, the display apparatus 1 may include a single light source apparatus 1000 that is integrally formed.

Hereinafter the structure of one light source apparatus 1000 among the plurality of light source apparatuses 1000 will be described particularly. In an embodiment, the structure of one light source apparatus 1000 described below may be applied to each of the plurality of light source apparatuses 1000.

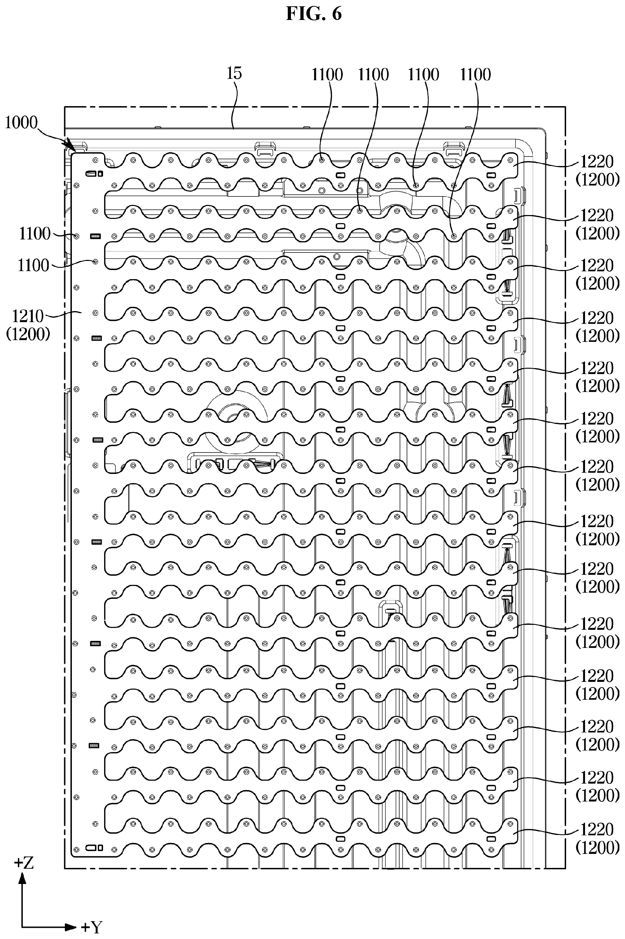

FIG. 6 is an enlarged view of a portion of the substrate and the bottom chassis of the display apparatus according to an embodiment of the present disclosure.

Referring to FIG. 6, the light source apparatus 1000 of the display apparatus 1 according to an embodiment of the present disclosure may include a plurality of substrate bars 1220.

The substrate bar 1220 may be a configuration forming at least a portion of the substrate 1200 described above and may be a configuration including a printed circuit board extending in one direction.

At least some of the plurality of light sources 1100 may be mounted on the plurality of substrate bars 1220, respectively. At least some of the plurality of light sources 1100 may be mounted on a front surface of the plurality of substrate bars 1220. The front surface of the plurality of substrate bars 1220 refers to one surface of the plurality of substrate bars 1220 in a direction in which the plurality of substrate bars 1220 faces the display panel 20.

The plurality of substrate bars 1220 may be composed of a printed circuit board on which the light source 1100 is mounted.

The plurality of substrate bars 1220 may be arranged to be spaced apart from each other. The plurality of substrate bars 1220 may be arranged to be spaced apart from each other along a first direction Z. For example, the first direction Z in which the plurality of substrate bars 1220 is spaced apart from each other may be parallel with the vertical direction (for example, up and down direction) of the display apparatus 1. The plurality of substrate bars 1220 may be parallel with each other at positions spaced apart from each other.

Each of the plurality of substrate bars 1220 may be formed to have a substantially bar shape. Particularly, each of the plurality of substrate bars 1220 may have a width in the first direction Z and may extend in a second direction Y different from the first direction Z. That is, each of the plurality of substrate bars 1220 may have a shape in which a length in the second direction Y is longer than a width in the first direction Z.

For example, a width direction of each of the plurality of substrate bars 1220 may be parallel to the vertical direction (that is, up and down direction) of the display apparatus 1. For example, a direction in which each of the plurality of substrate bars 1220 extends may be parallel to the horizontal direction (that is, left and right direction) of the display apparatus 1.

For example, the direction in which each of the plurality of substrate bars 1220 extends may be parallel to the long side direction of the display apparatus 1. For example, the width direction of each of the plurality of substrate bars 1220 may be parallel to the short side direction of the display apparatus 1.

The direction in which the plurality of substrate bars 1220 is spaced apart from each other may be parallel to each width direction. In other words, the plurality of substrate bars 1220 may be arranged to be spaced apart from each other along the first direction Z, which is each width direction.

Each of the plurality of substrate bars 1220 may extend in a direction different from the direction in which the plurality of substrate bars 1220 is spaced apart from each other. Particularly, each of the plurality of substrate bars 1220 may extend in a direction (Y direction) perpendicular to the direction in which the plurality of substrate bars 1220 is spaced apart from each other (Z direction). That is, the first direction and the second direction may be directions perpendicular to each other.

Alternatively, the direction in which the plurality of substrate bars 1220 is arranged to be spaced apart from each other and the direction in which each of the plurality of substrate bars 1220 extends may have a predetermined angle, but the angle may not be exactly vertical.

For example, the plurality of substrate bars 1220 may be arranged to allow a distance between the plurality of substrate bars 1220 in the first direction Z to be regular. In other words, the distance in the first direction Z between a pair of adjacent substrate bars 1220 among the plurality of substrate bars 1220 may be approximately the same. Accordingly, the uniformity of luminance of the display apparatus 1 may be improved.

For example, the plurality of substrate bars 1220 may be formed to have shapes that correspond to each other. For example, the widths of the plurality of substrate bars 1220 in the first direction (Z direction) may correspond to each other. For example, the lengths of the plurality of substrate bars 1220 extending in the second direction (Y direction) may correspond to each other. For example, the plurality of substrate bars 1220 may be formed in sizes corresponding to each other.

Each of the plurality of substrate bars 1220 may be mounted on the bottom chassis 15. As each of the plurality of substrate bars 1220 is mounted on the bottom chassis 15 and maintains a fixed position, the plurality of light sources 1100 mounted on the plurality of substrate bars 1220 may be stably disposed at each designed position.

The reflective sheet 120 may be attached to the front surface of each of the plurality of substrate bars 1220.

The light source apparatus 1000 of the display apparatus 1 may include a substrate body 1210. The substrate body 1210 may be a configuration forming at least a portion of the substrate 1200 described above and may be a configuration including a printed circuit board.

The plurality of substrate bars 1220 may be connected to the substrate body 1210. The plurality of substrate bars 1220 may be supported by the substrate body 1210. For example, the plurality of substrate bars 1220 may be connected to one side of the substrate body 1210.

The plurality of substrate bars 1220 may extend from the substrate body 1210. For example, each of the plurality of substrate bars 1220 may extend from the substrate body 1210 to the second direction Y. For example, each of the plurality of substrate bars 1220 may extend from one side, which is in the second direction Y, of the substrate body 1210.

For example, the substrate body 1210 may extend along the first direction Z. For example, the substrate body 1210 may have a shape in which a length in the first direction Z is greater than a width in the second direction Y. In this case, as the substrate body 1210 extends along the direction in which the plurality of substrate bars 1220 is arranged, the substrate body 1210 may have a structure in which a greater number of substrate bars 1220 are connected. Further, in this case, as the plurality of substrate bars 1220 extends from one side, which is in the second direction Y corresponding to the width direction (that is, the relatively short direction), of the substrate body 1210, the plurality of substrate bars 1220 may have a shape that extends longer.

For example, the substrate body 1210 may be mounted on the bottom chassis 15. As the substrate body 1210 is mounted on the bottom chassis 15 so as to maintain a fixed position, the plurality of light sources 1100 mounted on the substrate body 1210 may be stably disposed at each designed position. In addition, as the substrate body 1210 is mounted on the bottom chassis 15, the plurality of substrate bars 1220 connected to the substrate body 1210 may be more stably supported by the substrate body 1210.

For example, some of the plurality of light sources 1100 may be mounted on the substrate body 1210. Some of the plurality of light sources 1100 may be mounted on the front surface of the substrate body 1210. The front surface of the substrate body 1210 refers to one surface of the substrate body 1210 in the direction in which the substrate body 1210 faces the display panel 20.

The substrate body 1210 may be composed of a printed circuit board on which the light source 1100 is mounted.

The reflective sheet 120 may be attached to the front surface of the substrate body 1210. For example, an integrated reflective sheet 120 may be attached to the front surface of the substrate body 1210 and the plurality of substrate bars 1220. In this case, the uniformity of luminance due to the light reflected by the reflective sheet 120 may be improved, and the process of attaching the reflective sheet 120 to the front surface of the substrate body 1210 and the plurality of substrate bars 1220 may be simplified. However, the present disclosure is not limited thereto, and the plurality of reflective sheets 120, which is distinct from each other, may be attached to the front surfaces of the substrate body 1210 and the plurality of substrate bars 1220.

For example, the substrate body 1210 and the plurality of substrate bars 1220 may be formed integrally with each other. In other words, the substrate body 1210 and the plurality of substrate bars 1220 may be connected to each other to form an integrated light source substrate 1200. The substrate 1200 may be composed of a printed circuit board including the substrate body 1210 and the plurality of substrate bars 1220. Alternatively, the substrate body 1210 and the plurality of substrate bars 1220 may be separate components that are not integrally formed with each other and connected through an assembly process.

The structure of the light source apparatus 1000, such as the substrate body 1210 and the substrate bar 1220, described above with reference to FIG. 6 is only an example, and the present disclosure is not limited thereto.

FIG. 6 illustrates an embodiment in which each of the plurality of substrate bars 1220 extends from the substrate body 1210 to the right direction (+Y direction), but is not limited thereto. The plurality of substrate bars 1220 may extend from the substrate body 1210 to the left direction (-Y direction).

In addition, FIG. 6 illustrates an embodiment in which the substrate body 1210 extends in the vertical direction (Z direction) of the display apparatus 1, but is not limited thereto. For example, the substrate body 1210 may extend in the horizontal direction (Y direction).

In addition, FIG. 6 illustrates an embodiment in which each of the plurality of substrate bars 1220 extends in the horizontal direction (Y direction) from one side, which is in the horizontal direction (Y direction), of the substrate body 1210, but is not limited thereto. Alternatively, each of the plurality of substrate bars 1220 may extend in the vertical direction (Z direction) from one side, which is in the vertical direction (Z direction), of the substrate body 1210. In this case, the plurality of substrate bars 1220 may be arranged to be spaced apart from each other in the horizontal direction (Y direction).

In addition, unlike the above-mentioned description, a first direction that is the width direction of each of the plurality of substrate bars 1220, or a first direction in which the plurality of substrate bars 1220 is spaced apart from each other, or a first direction in which the substrate body 1210 extends or a second direction in which each of the plurality of substrate bars 1220 extends may not be parallel to either the vertical direction (Z direction) or the horizontal direction (Y direction) of the display apparatus 1.

However, hereinafter for convenience of description, the present disclosure will be described based on an embodiment in which the first direction is parallel to the vertical direction (Z direction) of the display apparatus 1, and the second direction is parallel to the horizontal direction (Y direction) of the display apparatus 1.

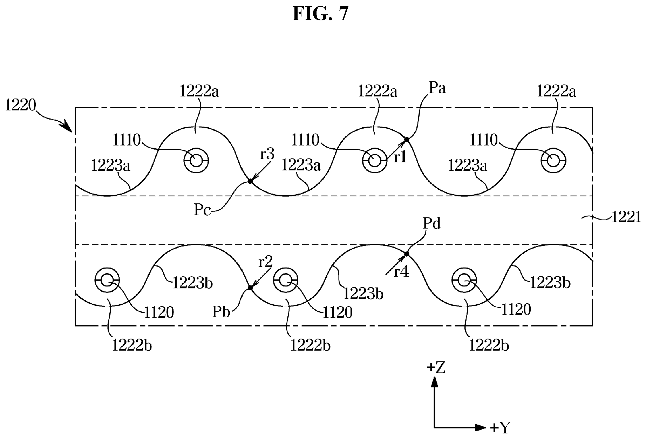

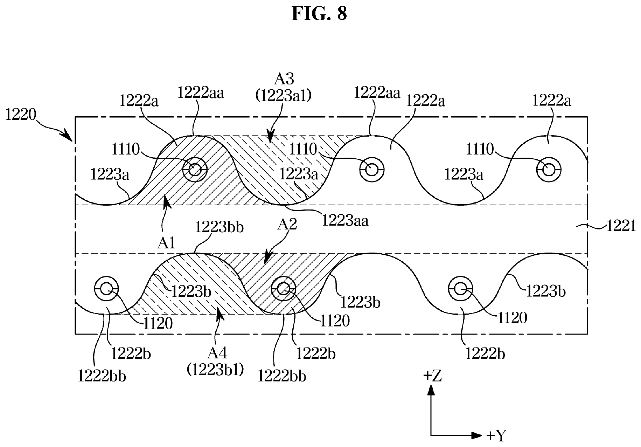

FIG. 7 is an enlarged view of a portion of the substrate of the display apparatus according to an embodiment of the present disclosure. FIG. 8 is an enlarged view of a portion of the substrate of the display apparatus according to an embodiment of the present disclosure, illustrating sizes of protruding portion and recess region.

A structure of one substrate bar 1220 among the plurality of substrate bars 1220 shown in FIG. 6 will be described with reference to FIGS. 7 and 8. A structure of the substrate bar 1220 shown in FIGS. 7 and 8 may be applied to correspond to the structure of each of the plurality of substrate bars 1220.

Referring to FIGS. 7 and 8, the substrate bar 1220 of the display apparatus 1 according to an embodiment of the present disclosure may include a central extending portion 1221 extending in one direction, and protruding portions 1222a and 1222b protruding from the central extending portion 1221. The central extending portion 1221 and the protruding portions 1222a and 1222b may form a portion of the substrate 1200 as a portion of the substrate bar 1220.

The central extending portion 1221 may extend in the second direction (Y direction). A width direction of the central extending portion 1221 may be parallel to the first direction (Z direction). The central extending portion 1221 may have a shape in which an extension length in the second direction (Y direction) is greater than a width in the first direction (Z direction).

The central extending portion 1221 may be provided in a central portion of the substrate bar 1220. The central extending portion 1221 may include a region that passes through the center of the substrate bar 1220 and extends in the second direction (Y direction).

For example, the central extending portion 1221 may include a substantially rectangular bar-shaped region, as illustrated in FIGS. 7 and 8.

The substrate bar 1220 may include a plurality of first protruding portions 1222a protruding from one side of the central extending portion 1221. The plurality of first protruding portions 1222a may protrude from one side, which is in the first direction (Z direction), of the central extending portion 1221. Each of the plurality of first protruding portions 1222a may extend from one side of the central extending portion 1221 to an outside of the central extending portion 1221. Each of the plurality of first protruding portions 1222a may extend from the central extending portion 1221 to the first direction (Z direction). For example, each of the plurality of first protruding portions 1222a may extend upward from an upper side of the central extending portion 1221.

For example, the first protruding portion 1222a may be connected to the central extending portion 1221 and formed integrally with each other.

The plurality of first protruding portions 1222a may be arranged along the second direction (Y direction). For example, the plurality of first protruding portions 1222a may be arranged in such a way that positions thereof in the first direction Z (that is, a vertical height of the display apparatus 1) corresponds to each other.

For example, the plurality of first protruding portions 1222a may be arranged at regular intervals along the second direction (Y direction).

For example, the plurality of first protruding portions 1222a may be formed to have shapes that correspond to each other. For example, a length of each of the plurality of first protruding portions 1222a protruding from the central extending portion 1221 to the first direction (Z direction) may correspond to each other.

Some of the plurality of light sources 1100 mounted on the substrate bar 1220 may be mounted on the plurality of first protruding portions 1222a. Hereinafter a light source mounted on each of the plurality of first protruding portions 1222a will be referred to as 'first side light source 1110'. For example, a single first side light source 1110 may be mounted on a single first protruding portion 1222a, but the present disclosure is not limited thereto.

The plurality of first side light sources 1110 may be disposed at positions spaced apart from the central extending portion 1221 to the first direction (Z direction). The plurality of first side light sources 1110 may be arranged to be biased upward from the central extending portion 1221 as illustrated in FIGS. 7 and 8.

The plurality of first side light sources 1110 may be arranged along the second direction (Y direction). For example, the plurality of first side light sources 1110 may be arranged in such a way that positions thereof in the first direction Z correspond to each other.

For example, the plurality of first side light sources 1110 may be arranged at regular intervals along the second direction (Y direction).

The substrate bar 1220 may include a plurality of second protruding portions 1222b. The plurality of second protruding portions 1222b may protrude from the other side, which is in the first direction (Z direction), of the central extending portion 1221. The other side of the central extending portion 1221 means the other side different from the one side of the central extending portion 1221 on which the first protruding portion 1222a protrudes. For example, the plurality of second protruding portions 1222b may protrude in a direction opposite to a protrusion direction of the plurality of first protruding portions 1222a from the other side of the central extending portion 1221 opposite to the one side of the central extending portion 1221 from which the plurality of first protruding portions 1222a protrudes. Each of the plurality of first protruding portions 1222a may protrude from the other side of the central extending portion 1221 toward the outside of the central extending portion 1221.

Each of the plurality of second protruding portions 1222b may extend from the central extending portion 1221 to the first direction (Z direction). For example, each of the plurality of second protruding portions 1222b may extend downward from the lower side of the central extending portion 1221.

For example, the second protruding portion 1222b may be connected to the central extending portion 1221 and formed integrally with each other.

The plurality of second protruding portions 1222b may be arranged along the second direction (Y direction). For example, the plurality of second protruding portions 1222b may be arranged in such a way that positions thereof in the first direction Z (that is, the vertical height of the display apparatus 1) correspond to each other.

For example, the plurality of second protruding portions 1222b may be arranged at regular intervals along the second direction (Y direction).

For example, the plurality of second protruding portions 1222b may be formed to have shapes that correspond to each other. For example, a length of each of the plurality of second protruding portions 1222b protruding from the central extending portion 1221 to the first direction (Z direction) may correspond to each other.

For example, a length, in which each of the plurality of first protruding portions 1222a protrudes from the central extending portion 1221 may be substantially the same as a length, in which each of the plurality of second protruding portions 1222b protrudes from the central extending portion 1221.

Some of the plurality of light sources 1100 mounted on the substrate bar 1220 may be mounted on the plurality of second protruding portions 1222b. Hereinafter a light source mounted on each of the plurality of second protruding portions 1222b will be referred to as 'second side light source 1120'. For example, a single second side light source 1120 may be mounted on a single second protruding portion 1222b, but is not limited thereto.

The plurality of second side light sources 1120 may be disposed at positions spaced apart from the central extending portion 1221 to the first direction (Z direction). The plurality of second side light sources 1120 may be arranged to be biased downward from the central extending portion 1221 as illustrated in FIGS. 7 and 8.

The plurality of second side light sources 1120 may be arranged along the second direction (Y direction). For example, the plurality of second side light sources may be arranged in such a way that positions thereof in the first direction Z correspond to each other.

For example, the plurality of second side light sources 1120 may be arranged at regular intervals along the second direction (Y direction).

Some regions of the central extending portion 1221, in which the plurality of first protruding portions 1222a protrudes, and other regions of the central extending portion 1221, in which the plurality of second protruding portions 1222b extends, may intersect with respect to the second direction (Y direction). In other words, the first protruding portion 1222a and the second protruding portion 1222b may be arranged to intersect with each other. In a single substrate bar 1220, the plurality of first protruding portions 1222a and the plurality of second protruding portions 1222b may be arranged not to be parallel to each other in the first direction Z.

With this configuration, the first side light source 1110 and the second side light source 1120 may be arranged to intersect with each other along the second direction (Y direction). In a single substrate bar 1220, the plurality of light sources 1100 may be arranged in such a way that the first side light source 1110 disposed on one side in the first direction Z and the second side light source 1120 disposed on the other side are arranged to intersect with each other along the second direction (Y direction). Accordingly, the uniformity of luminance by the plurality of light sources 1100 may be improved. That is, in a single substrate bar 1220, the plurality of light sources 1100 may be arranged in a zigzag pattern.

As the plurality of light sources 1100 is arranged as described above in each substrate bar 1220, a distance between adjacent light sources 1100 in a pair of adjacent substrate bars 1220 among the plurality of substrate bars 1220 may be reduced, and the luminance and uniformity of luminance of the display apparatus 1 may be improved.

The substrate bar 1220 may include a plurality of first recess portions 1223a. Each of the plurality of first recess portions 1223a may be formed between a pair of adjacent first protruding portions 1222a among the plurality of first protruding portions 1222a. That is, the first recess portion 1223a may be defined as a region of the substrate bar 1220 formed between a pair of adjacent first protruding portions 1222a.

The plurality of first recess portions 1223a may be provided on one side, which is in the first direction Z, of the central extending portion 1221. For example, the plurality of first recess portions 1223a may be provided on the upper side of the central extending portion 1221.

The plurality of first recess portions 1223a may be formed to have a shape that is relatively concavely recessed toward the inside of the central extending portion 1221 in comparison with the plurality of first protruding portions 1222a.

The plurality of first recess portions 1223a may be arranged along the second direction (Y direction). For example, the plurality of first recess portions 1223a may be arranged in such a way that positions thereof in the first direction Z (that is, the vertical height of the display apparatus 1) correspond to each other.

For example, the plurality of first recess portions 1223a may be arranged at regular intervals along the second direction (Y direction).

For example, the plurality of first recess portions 1223a may be formed to have shapes that correspond to each other.

The substrate bar 1220 may include a plurality of second recess portions 1223b. Each of the plurality of second recess portions 1223b may be formed between a pair of adjacent second protruding portions 1222b among the plurality of second protruding portions 1222b. That is, the second recess portion 1223b may be defined as a region of the substrate bar 1220 formed between a pair of adjacent second protruding portions 1222b.

The plurality of second recess portions 1223b may be provided on the other side, which is in the first direction Z, of the central extending portion 1221. The other side of the central extending portion 1221 means the other side different from the one side of the central extending portion 1221 in which the first recess portion 1223a is provided. For example, the plurality of second recess portions 1223b may be provided on the lower side of the central extending portion 1221.

The plurality of second recess portions 1223b may be formed to have a shape that is relatively concavely recessed toward the inside of the central extending portion 1221 in comparison with the plurality of second protruding portions 1222b.

The plurality of second recess portions 1223b may be arranged along the second direction (Y direction). For example, the plurality of second recess portions 1223b may be arranged in such a way that positions thereof in the first direction Z (that is, the vertical height of the display apparatus 1) correspond to each other.

For example, the plurality of second recess portions 1223b may be arranged at regular intervals along the second direction (Y direction).

For example, the plurality of second recess portions 1223b may be formed to have shapes that correspond to each other.

Some regions of the central extending portion 1221, in which the plurality of first recess portions 1223a is provided, and other regions of the central extending portion 1221, in which the plurality of second recess portions 1223b is provided, may intersect with respect to the second direction (Y direction). In other words, the first recess portion 1223a and the second recess portions 1223b may be arranged to intersect with each other. In a single substrate bar 1220, the plurality of first recess portions 1223a and the plurality of second recess portions 1223b may be arranged not to be parallel to each other in the first direction Z.

For example, each of the plurality of first protruding portions 1222a may be arranged side by side in the first direction Z with the nearest second recess portion 1223b among the plurality of second recess portions 1223b. That is, the plurality of first protruding portions 1222a and the plurality of second recess portions 1223b may be arranged side by side in the first direction Z.

Further, each of the plurality of second protruding portions 1222b may be arranged side by side in the first direction Z with the nearest first recess portion 1223a among the plurality of first recess portions 1223a. That is, the plurality of second protruding portions 1222b and the plurality of first recess portions 1223a may be arranged side by side in the first direction Z.

Accordingly, the substrate bar 1220 may have an overall shape that extends in a zigzag pattern.

A shape of an edge of each of the plurality of first recess portions 1223a may be different from a shape of an edge of each of the plurality of first protruding portions 1222a. In other words, a shape of an outer surface of each of the plurality of first recess portions 1223a may be different from a shape of an outer surface of each of the plurality of first protruding portions 1222a.

For example, a curvature of an edge of each of the plurality of first recess portions 1223a may be different from a curvature of an edge of each of the plurality of first protruding portions 1222a. In other words, a curvature of an outer surface of each of the plurality of first recess portions 1223a may be different from a curvature of an outer surface of each of the plurality of first protruding portions 1222a.

Alternatively, the shape of the edge of each of the plurality of first recess portions 1223a may be different from the shape of the edge of each of the plurality of second protruding portions 1222b. In other words, the shape of the outer surface of each of the plurality of first recess portions 1223a may be different from the shape of the outer surface of each of the plurality of second protruding portions 1222b.

For example, the curvature of the edge of each of the plurality of first recess portions 1223a may be different from the curvature of the edge of each of the plurality of second protruding portions 1222b. In other words, the curvature of the outer surface of each of the plurality of first recess portions 1223a may be different from the curvature of the outer surface of each of the plurality of second protruding portions 1222b.

The shape of the edge of each of the plurality of second recess portions 1223b may be different from the shape of the edge of each of the plurality of second protruding portions 1222b. In other words, the shape of the outer surface of each of the plurality of second recess portions 1223b may be different from the shape of the outer surface of each of the plurality of second protruding portions 1222b.

For example, the curvature of the edge of each of the plurality of second recess portions 1223b may be different from the curvature of the edge of each of the plurality of second protruding portions 1222b. In other words, the curvature of the outer surface of each of the plurality of second recess portions 1223b may be different from the curvature of the outer surface of each of the plurality of second protruding portions 1222b.

Alternatively, the shape of the edge of each of the plurality of second recess portions 1223b may be different from the shape of the edge of each of the plurality of first protruding portions 1222a. In other words, the shape of the outer surface of each of the plurality of second recess portions 1223b may be different from the shape of the outer surface of each of the plurality of first protruding portions 1222a.

For example, the curvature of the edge of each of the plurality of second recess portions 1223b may be different from the curvature of the edge of each of the plurality of first protruding portions 1222a. In other words, the curvature of the outer surface of each of the plurality of second recess portions 1223b may be different from the curvature of the outer surface of each of the plurality of first protruding portions 1222a.

The 'edge of the first protruding portion 1222a' or 'outer surface of the first protruding portion 1222a' refers to a portion of an outer edge portion of the substrate bar 1220, and means an outer edge portion of a portion of the substrate bar 1220 where the first protruding portion 1222a is provided. The 'edge of the first protruding portion 1222a' may be used in a corresponding meaning with terms such as 'outline of the first protruding portion 1222a' or 'profile of the first protruding portion 1222a'.

Likewise, the 'edge of the second protruding portion 1222b' or 'outer surface of the second protruding portion 1222b' refers to a portion of an outer edge portion of the substrate bar 1220, and means an outer edge portion of a portion of the substrate bar 1220 where the second protruding portion 1222b is provided. The 'edge of the second protruding portion 1222b' may be used in a corresponding meaning with terms such as 'outline of the second protruding portion 1222b' or 'profile of the second protruding portion 1222b'.

Likewise, the 'edge of the first recess portion 1223a' or 'outer surface of the first recess portion 1223a' means a portion of an outer edge portion of the substrate bar 1220, and an outer edge portion of a portion of the substrate bar 1220 where the first recess portion 1223a is provided. In other words, the 'edge of the first recess portion 1223a' or 'outer surface of the first recess portion 1223a' means a portion of the outer edge portion of the substrate bar 1220, and an outer edge portion provided between the outer edge of each of a pair of adjacent first protruding portions 1222a. The 'edge of the first recess portion 1223a' may be used in a corresponding meaning with terms such as 'outline of the first recess portion 1223a' or 'profile of the first recess portion 1223a'.

Likewise, the 'edge of the second recess portion 1223b' or 'outer surface of the second recess portion 1223b' means a portion of an outer edge portion of the substrate bar 1220, and an outer edge portion of a portion of the substrate bar 1220 where the second recess portion 1223b is provided. In other words, the 'edge of the second recess portion 1223b' or 'outer surface of the second recess portion 1223b' means a portion of an outer edge portion of the substrate bar 1220, and an outer edge portion provided between the outer edge of each of a pair of adjacent second protruding portions 1222b. The 'edge of the second recess portion 1223b' may be used in a corresponding meaning with terms such as 'outline of the second recess portion 1223b' or 'profile of the second recess portion 1223b'.

In addition, the meaning of the expression 'the shape of the edge or outer surface of the recess portions 1223a and 1223b is different from the shape of the edge or inner surface of the protruding portions 1222a and 1222b' described above does not simply mean that the protruding portions 1222a and 1222b have a protruding shape and the recess portions 1223a and 1223b have a recessed shape and thus the shapes are different from each other, but that the shapes of the lines connected along each edge are different from each other.

Referring to FIGS. 7 and 8, the edge of each of the plurality of first protruding portions 1222a and the edge of each of the plurality of second recess portions 1223b may have different curvatures at points corresponding to each other in the first direction Z. For example, a first point Pa may be defined on one of the plurality of first protruding portions 1222a and a second point Pd may be defined on one of the plurality of second recess portions 1223b. The first point Pa and the second point Pd may be positioned to correspond to each other in the first direction Z. A curvature (radius of curvature r1) at the first point Pa and a curvature (radius of curvature r4) at the second point Pd may be different from each other. In other words, a first point Pa on an edge spaced apart by a predetermined distance in the second direction Y from an outer end 1222aa, which is most protruding in the first direction Z, of each of the plurality of first protruding portions 1222a, and a second point Pd on an edge spaced apart by the same distance in the second direction Y from an inner end 1223bb, which is the nearest to the central extending portion 1221 in the first direction Z, of each of the plurality of second recess portions 1223b may be defined. The curvature (radius of curvature r1) at the first point Pa and the curvature (radius of curvature r4) at the second point Pd may be different from each other.

The edge of each of the plurality of second protruding portions 1222b and the edge of each of the plurality of first recess portions 1223a may have different curvatures at points corresponding to each other in the first direction Z. For example, a third point Pb may be defined on one of the plurality of second protruding portions 1222b and a fourth point Pc may be defined on one of the plurality of first recess portions 1223a. The third point Pb and the fourth point Pc may be positioned to correspond to each other in the first direction Z. A curvature (radius of curvature r2) at the third point Pb and a curvature (radius of curvature r3) at the fourth point Pc may be different from each other. In other words, a third point Pb on an edge spaced apart by a predetermined distance in the second direction Y from an outer end 1222bb, which is most protruding in the first direction Z, of each of the plurality of second protruding portions 1222b, and a fourth point Pc on an edge spaced apart by the same distance in the second direction Y from an inner end 1223aa, which is the nearest to the central extending portion 1221 in the first direction Z, of each of the plurality of first recess portions 1223a may be defined. The curvature (radius of curvature r1) at the third point Pb and the curvature (radius of curvature r4) at the fourth point Pc may be different from each other.

In addition, the first point Pa on an edge spaced apart by a predetermined distance in the second direction Y from the outer end 1222aa, which is most protruding in the first direction Z, of each of the plurality of first protruding portions 1222a, and the fourth point Pc on an edge spaced apart by the same distance in the second direction Y from the inner end 1223aa, which is the nearest to the central extending portion 1221 in the first direction Z, of each of the plurality of first recess portions 1223a may be defined. The curvature (radius of curvature r1) at the first point Pa and the curvature (radius of curvature r3) at the fourth point Pc may be different from each other.

In addition, the third point Pb on an edge spaced apart by a predetermined distance in the second direction Y from the outer end 1222bb, which is most protruding in the first direction Z, of each of the plurality of second protruding portions 1222b, and the second point Pd on an edge spaced apart by the same distance in the second direction Y from the inner end 1223bb, which is the nearest to the central extending portion 1221 in the first direction Z, of each of the plurality of second recess portions 1223b may be defined. The curvature (radius of curvature r2) at the third point Pb and the curvature (radius of curvature r4) at the second point Pd may be different from each other.

According to the embodiments illustrated in FIGS. 7 and 8, the shape of the edge of each of the plurality of first protruding portions 1222a and the shape of the edge of each of the plurality of second protruding portions 1222b may correspond to each other. In other words, the shape of the outer surface of each of the plurality of first protruding portions 1222a and the shape of the outer surface of each of the plurality of second protruding portions 1222b may correspond to each other. Particularly, the edge of each of the plurality of first protruding portions 1222a and the edge of each of the plurality of second protruding portions 1222b may have curvatures that correspond to each other. In other words, the outer surface of each of the plurality of first protruding portions 1222a and the outer surface of each of the plurality of second protruding portions 1222b may have curvatures that correspond to each other.

In addition, according to the embodiments illustrated in FIGS. 7 and 8, the shape of the edge of each of the plurality of first recess portions 1223a and the shape of the edge of each of the plurality of second recess portions 1223b may correspond to each other. In other words, the shape of the outer surface of each of the plurality of first recess portions 1223a and the shape of the outer surface of each of the plurality of second recess portions 1223b may correspond to each other. Particularly, the edge of each of the plurality of first recess portions 1223a and the edge of each of the plurality of second recess portions 1223b may have curvatures that correspond to each other. In other words, the outer surface of each of the plurality of first recess portions 1223a and the outer surface of each of the plurality of second recess portions 1223b may have curvatures that correspond to each other.

At this time, the shape of the edge of each of the plurality of first protruding portions 1222a and the plurality of second protruding portions 1222b may be different from the shape of the edge of each of the plurality of first recess portions 1223a and the plurality of second recess portions 1223b. In other words, the shape of the outer surface of each of the plurality of first protruding portions 1222a and the plurality of second protruding portions 1222b may be different from the shape of the outer surface of each of the plurality of first recess portions 1223a and the plurality of second recess portions 1223b. Particularly, as illustrated in FIGS. 7 and 8, the curvature of the edge of each of the plurality of first protruding portions 1222a and the plurality of second protruding portions 1222b may be different from the curvature of the edge of each of the plurality of first recess portions 1223a and the plurality of second recess portions 1223b. In other words, the curvature of the outer surface of each of the plurality of first protruding portions 1222a and the plurality of second protruding portions 1222b may be different from the curvature of the outer surface of each of the plurality of first recess portions 1223a and the plurality of second recess portions 1223b.

In this way, because the shape of each of the protruding portions 1222a and 1222b and the shape of each of the recess portions 1223a and 1223b of the substrate bar 1220 are different, the efficiency of the process for manufacturing the substrate 1200 may be improved. For example, in a process for manufacturing the plurality of substrates 1200 from one substrate material, when the shape of each of the protruding portions 1222a and 1222b and the shape of each of the recess portions 1223a and 1223b arranged side by side are different from each other, it may be easier to separate the substrate bars 1220 included in different substrates 1200 in comparison with when the shapes are the same. Accordingly, the manufacturing cost of the product may be reduced.

Particularly, the curvature of the edge of each of the plurality of first protruding portions 1222a may be set to be greater than the curvature of the edge of each of the plurality of first recess portions 1223a. In other words, the radius of curvature r1 of the edge of each of the plurality of first protruding portions 1222a may be smaller than the radius of curvature r3 of the edge of each of the plurality of first recess portions 1223a.

Referring to FIGS. 7 and 8 for more detailed description, the curvature at the first point Pa on the first protruding portion 1222a may be smaller than the curvature at the fourth point Pc of the first recess portion 1223a. For example, a distance from the outer end 1222aa of the first protruding portion 1222a to the first point Pa in the second direction Y and a distance from the inner end 1223aa of the first recess portion 1223a to the second point Pc in the second direction Y may correspond to each other.

Particularly, when the first point Pa of the first protruding portion 1222a is located at a portion adjacent to the outer end 1222aa on the edge of the first protruding portion 1222a, and the fourth point Pc of the first recess portion 1223a is located at a portion adjacent to the inner end 1223aa on the edge of the first recess portion 1223a, an absolute value of the radius of curvature at the first point Pa may be less than or equal to an absolute value of the radius of curvature at the fourth point Pc.

The curvature of the edge of each of the plurality of first protruding portions 1222a may be set to be greater than the curvature of the edge of each of the plurality of second recess portions 1223b. In other words, the radius of curvature r1 of the edge of each of the plurality of first protruding portions 1222a may be smaller than the radius of curvature r4 of the edge of each of the plurality of second recess portions 1223b.

Referring to FIGS. 7 and 8 for more detailed description, the curvature at the first point Pa on the first protruding portion 1222a may be smaller than the curvature at the second point Pd of the second recess portion 1223b. For example, a distance from the outer end 1222aa of the first protruding portion 1222a to the first point Pa in the second direction Y and a distance from the inner end 1223bb of the second recess portion 1223b to the second point Pd in the second direction Y may correspond to each other.

Particularly, when the first point Pa of the first protruding portion 1222a is located at a portion adjacent to the outer end 1222aa on the edge of the first protruding portion 1222a, and the second point Pd of the second recess portion 1223b is located at a portion adjacent to the inner end 1223bb on the edge of the second recess portion 1223b, an absolute value of the radius of curvature at the first point Pa may be less than or equal to an absolute value of the radius of curvature at the second point Pd.

The curvature of the edge of each of the plurality of second protruding portions 1222b may be set to be greater than the curvature of the edge of each of the plurality of second recess portions 1223b. In other words, the radius of curvature r2 of the edge of each of the second protruding portions 1222b may be smaller than the radius of curvature r4 of the edge of each of the plurality of second recess portions 1223b.

Referring to FIGS. 7 and 8 for more detailed description, the curvature at the third point Pb on the second protruding portion 1222b may be smaller than the curvature at the second point Pd of the second recess portion 1223b. For example, a distance from the outer end 1222bb of the second protruding portion 1222b to the third point Pb in the second direction Y and a distance from the inner end 1223bb of the second recess portion 1223b to the second point Pd in the second direction Y may correspond to each other.

Particularly, when the third point Pb of the second protruding portion 1222b is located at a portion adjacent to the outer end 1222bb on the edge of the second protruding portion 1222b, and the second point Pd of the second recess portion 1223b is located at a portion adjacent to the inner end 1223bb on the edge of the second recess portion 1223b, an absolute value of the radius of curvature at the third point Pb may be less than or equal to an absolute value of the radius of curvature at the second point Pd.

The curvature of the edge of each of the plurality of second protruding portions 1222b may be set to be greater than the curvature of the edge of each of the plurality of first recess portions 1223a. In other words, the radius of curvature r2 of the edge of each of the plurality of second protruding portions 1222b may be smaller than the radius of curvature r3 of the edge of each of the plurality of first recess portions 1223a.

Referring to FIGS. 7 and 8 for more detailed description, the curvature at the third point Pb on the second protruding portion 1222b may be smaller than the curvature at the fourth point Pc of the first recess portion 1223a. For example, a distance from the outer end 1222bb of the second protruding portion 1222b to the third point Pb in the second direction Y and a distance from the inner end 1223aa of the first recess portion 1223a to the fourth point Pc in the second direction Y may correspond to each other.

Particularly, when the third point Pb of the second protruding portion 1222b is located at a portion adjacent to the outer end 1222bb on the edge of the second protruding portion 1222b, and the fourth point Pc of the first recess portion 1223a is located at a portion adjacent to the inner end 1223aa on the edge of the first recess portion 1223a, an absolute value of the radius of curvature at the third point Pb may be less than or equal to an absolute value of the radius of curvature at the fourth point Pc.

That is, the curvature of each of the protruding portions 1222a and 1222b provided on the substrate bar 1220 may be set to be greater than the curvature of each of the recess portions 1223a and 1223b. In other words, the radius of curvature of each of the protruding portions 1222a and 1222b provided on the substrate bar 1220 may be less than the radius of curvature of each of the recess portions 1223a and 1223b.

When the substrate bar 1220 has the above-mentioned structure, the efficiency of the process for manufacturing the substrate 1200 may be improved. For example, in the process for manufacturing the plurality of substrates 1200 from a single substrate material, when the curvature of each of the protruding portions 1222a and 1222b arranged in parallel is greater than the curvature of each of the recess portions 1223a and 1223b, the process for separating the substrate bars 1220 included in different substrates 1200 may be further simplified. In addition, during the process for manufacturing the plurality of substrates 1200 from the single substrate material, it is possible to reduce a portion that is unnecessarily removed and to prevent waste of materials, thereby promoting cost reduction. Accordingly, the manufacturing cost of the product may be reduced.

In addition, as the radius of curvature of each of the protruding portions 1222a and 1222b in the substrate bar 1220 decreases, the length protruding from the central extending portion 1221 relative to the area of each of protruding portions 1222a and 1222b may increase. As a result, the distance between adjacent light sources 1100 in a pair of adjacent substrate bars 1220 relative to the overall area of the plurality of substrate bars 1220 may decrease, and the luminance and uniformity of luminance of the display apparatus 1 may be improved.

In addition, as the radius of curvature of the recess portions 1223a and 1223b in the substrate bar 1220 increases, an area reduced in a portion corresponding to the recess portions 1223a and 1223b of the substrate bar 1220 relative to a depth, at which the recess portions 1223a and 1223b is recessed between a pair of protruding portions 1222a or 1222b, may increase.

Meanwhile, FIGS. 7 and 8 illustrate an embodiment in which the shape (particularly, curvature) of the edge of each of the plurality of first protruding portions 1222a and the edge of each of the plurality of second protruding portions 1222b correspond to each other, and the shape (particularly, curvatures) of the edge of each of the plurality of first recess portions 1223a and the edge of each of the plurality of second recess portions 1223b correspond to each other. In this case, the manufacturing process of the substrate 1200 may be simplified, the arrangement of the substrate 1200 may be easily designed, and thus efficiency may be improved in the design and manufacturing process of the product, and the manufacturing cost of the product may be reduced.

As illustrated in FIG. 8, a first recess region 1223a1 may be defined by one first recess portion 1223a among the plurality of first recess portions 1223a and a pair of first protruding portions 1222aa adjacent to the first recess portion 1223a. Particularly, the first recess region 1223a1 may be defined by one first recess portion 1223a among the plurality of first recess portions 1223a and a line connecting the outer end 1222aa of each of the pair of first protruding portions 1222a adjacent thereto.

In addition, as illustrated in FIG. 8, a second recess region 1223a2 may be defined by one second recess portion 1223b among the plurality of second recess portions 1223b and a pair of second protruding portions 1222b adjacent to the second recess portion 1223b. Particularly, the second recess region 1223a2 may be defined by one second recess portion 1223b among the plurality of second recess portions 1223b and a line connecting the outer end 1222bb of each of the pair of second protruding portions 1222b adjacent thereto.

A size A1 of the first protruding portion 1222a may be different from a size A3 of the first recess region 1223a1. In other words, an area A1 of the first protruding portion 1222a protruding from the central extending portion 1221 may be different from an area A3 of the first recess region 1223a1. For example, as illustrated in FIG. 8, the size A1 of the first protruding portion 1222a may be smaller than the size A3 of the first recess region 1223a1.

The size A1 of the first protruding portion 1222a may be different from a size A4 of the second recess region 1223b1. In other words, the area A1 of the first protruding portion 1222a protruding from the central extending portion 1221 may be different from an area A4 of the second recess region 1223b1. For example, as illustrated in FIG. 8, the size A1 of the first protruding portion 1222a may be smaller than the size A4 of the second recess region 1223b1.

A size A2 of the second protruding portion 1222b may be different from the size A4 of the second recess region 1223b1. In other words, an area A2 of the second protruding portion 1222b protruding from the central extending portion 1221 may be different from the area A4 of the second recess region 1223b1. For example, as illustrated in FIG. 8, the size A2 of the second protruding portion 1222b may be smaller than the size A4 of the second recess region 1223b1.

The size A2 of the second protruding portion 1222b may be different from a size A3 of the first recess region 1223a1. In other words, the area A2 of the second protruding portion 1222b protruding from the central extending portion 1221 may be different from an area A3 of the first recess region 1223a1. For example, as illustrated in FIG. 8, the size A2 of the second protruding portion 1222b may be smaller than the size A3 of the first recess region 1223a1.

For example, the size A1 of the first protruding portion 1222a may substantially correspond to the size A2 of the second protruding portion 1222b. For example, the size A3 of the first recess region 1223a1 may substantially correspond to the size A4 of the second recess region 1223b1.

That is, the size of each of the protruding portions 1222a and 1222b and the size of each of the recess portions 1223a and 1223b provided on the substrate bar 1220 may be different from each other. For example, the size of each of the protruding portions 1222a and 1222b provided on the substrate bar 1220 may be smaller than the size of each of the recess portions 1223a and 1223b.

When the substrate bar 1220 has the above-mentioned structure, the efficiency of the process for manufacturing the substrate 1200 may be improved.

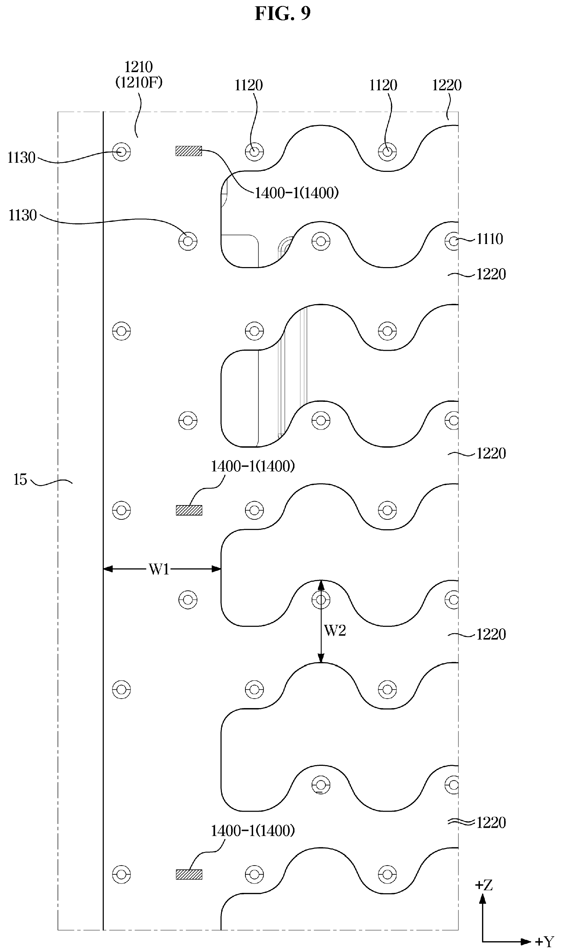

FIG. 9 is an enlarged view of a portion of an example of a light source apparatus of the display apparatus according to an embodiment of the present disclosure.

Referring to FIG. 9, the display apparatus 1 according to an embodiment of the present disclosure may include the substrate body 1210 connected to the plurality of substrate bars 1220.

The substrate body 1210 may extend in the first direction Z.

Some of the light sources 1130 among the plurality of light sources 1100 may be mounted on the substrate body 1210. For convenience, the light sources 1130 mounted on the substrate body 1210 are referred to as body light sources 1130 hereinafter.

For example, the plurality of body light sources 1130 may be mounted on the substrate body 1210. For example, the plurality of body light sources 1130 may be arranged at regular intervals from each other.

Some of the plurality of body light sources 1130 may be arranged in parallel to the plurality of light sources (that is, the first side light sources 1110) mounted on the plurality of first protruding portions 1222a provided on one of the plurality of substrate bars 1220 along the second direction Z. In this case, the body light sources 1130 and the first side light sources 1110 may be arranged at regular intervals from each other along the second direction Z.

Others of the plurality of body light sources 1130 may be arranged in parallel to the plurality of light sources (that is, the second side light sources 1120) mounted on the plurality of second protruding portions 1222b provided on one of the plurality of substrate bars 1220 along the second direction Z. In this case, the body light sources 1130 and the second side light sources 1120 may be arranged at regular intervals from each other along the second direction Z.

By this structure, the uniformity of luminance may be improved in the entire region of the screen by including the region corresponding to the position of the substrate body 1210 as well as the region corresponding to the position of the plurality of substrate bars 1220 on the screen provided by the display apparatus 1.

The display apparatus 1 may include a plurality of driving elements 1400 mounted on the substrate 1200. The plurality of driving elements 1400 may be configured to control at least some of the light sources 1100 among the plurality of light sources 1100 mounted on the same substrate 1200.

For example, the plurality of light sources 1100 may be divided into a plurality of dimming blocks including at least one light source 1100, and the plurality of driving elements 1400 may be configured to control the plurality of dimming blocks by outputting output signals.

For example, the plurality of driving elements 1400 may be implemented as a pixel integrated circuit (IC) or an active-matrix integrated circuit (AM IC).

For example, as illustrated in FIG. 9, a plurality of driving elements 1400-1 may be mounted on a front surface 1210F of the substrate body 1210. The front surface 1210F of the substrate body 1210 may include one surface of the substrate body 1210 facing the display panel 20.

The plurality of driving elements 1400-1 may be mounted on the front surface 1210F of the substrate body 1210. At this time, as illustrated in FIG. 9, the plurality of driving elements 1400-1 may be arranged along one direction on the front surface 1210F of the substrate body 1210. For example, the plurality of driving elements 1400-1 may be arranged spaced apart from each other along the first direction Z on the front surface 1210F of the substrate body 1210.

The substrate body 1210 may have a width W1 in the second direction Y, and each of the plurality of substrate bars 1220 may have a width W2 in the first direction Z.

Because the plurality of driving elements 1400-1 is mounted on the substrate body 1210, the width W1 of the substrate body 1210 in the second direction Y may be greater than the width W2 of each of the plurality of substrate bars 1220 in the first direction Z on which the plurality of driving elements 1400-1 is not mounted.

Meanwhile, as illustrated in FIG. 9, because the plurality of driving elements 1400-1 is mounted on the substrate body 1210 and arranged in a line along the first direction Z on the front surface 1210F of the substrate body 1210, traces of the substrate 1200 connected to the plurality of driving elements 1400-1 may be simplified.

That is, in the related art, the plurality of driving elements 1400 is arranged on both the substrate body 1210 and the plurality of substrate bars 1220 or only on the plurality of substrate bars 1220. Therefore, because the plurality of driving elements 1400 is scattered on the substrate 1200, layout of trace of the plurality of driving elements 1400 is complex and the number of via holes for connecting traces is also large. However, as illustrated in FIG. 9, because the plurality of driving elements 1400-1 is mounted in groups only on the substrate body 1210 and is arranged in a line along the first direction Z of the substrate body 1210, the layout of the trace of the plurality of driving elements 1400-1 may be simplified.

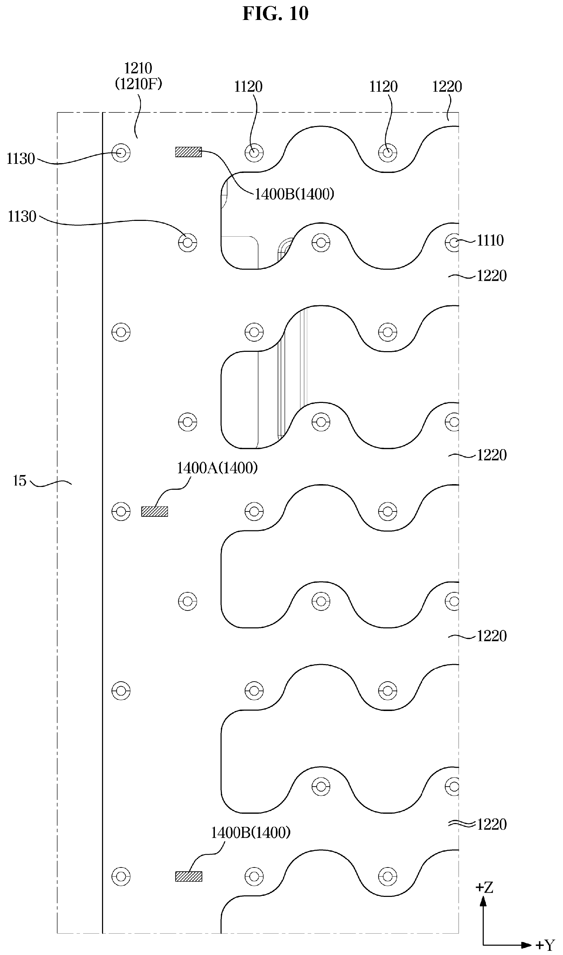

FIG. 10 is an enlarged view of a portion of another example of a light source apparatus of a display apparatus according to an embodiment of the present disclosure.

In describing a display apparatus 1 according to an embodiment of the present disclosure with reference to FIG. 10, the same drawing reference numerals may be given to configurations corresponding to the configurations of the embodiment described with reference to FIGS. 1 to 9, and descriptions thereof may be omitted.

Referring to FIG. 10, the display apparatus 1 according to an embodiment of the present disclosure may include a plurality of driving elements 1400A and 1400B. Each of the plurality of driving elements 1400A and 1400B according to the embodiment of FIG. 10 may have a structure corresponding to each of the plurality of driving elements 1400-1 according to the embodiment of FIG. 9.

As described above, a reflective sheet 120 may be attached to a front surface of a substrate body 1210. Accordingly, a penetration portion through which a plurality of driving elements 1400 penetrate may be formed in the reflective sheet 120 in a region corresponding to the positions of the plurality of driving elements 1400, and each of the plurality of driving elements 1400 may protrude toward the front side of the reflective sheet 120 by penetrating through the corresponding penetration portion.

In this case, a reflectivity of the reflective sheet 120 may be reduced at the positions of the plurality of driving elements 1400 and the corresponding penetration portions. As a result, uniformity of luminance of the display apparatus 1 may be reduced.

To release the difficulty, the plurality of driving elements 1400 may be arranged on a front surface 1210F of the substrate body 1210 to allow positions thereof in the first direction Z to be different from each other. Some of the driving elements 1400 among the plurality of driving elements 1400 may be arranged to allow positions thereof in the second direction Y to be different from those of other driving elements 1400.

Particularly, as illustrated in FIG. 10, the plurality of driving elements 1400 may include a driving element 1400A in a first column and a driving element 1400B in a second column.

The driving element 1400A of the first column may be arranged along the first direction Z. Particularly, driving elements 1400A included in the driving element 1400A of the first column may be arranged to be spaced apart from each other along the first direction Z.

Additionally, the driving element 1400B of the second column may be arranged along the first direction Z. Particularly, driving elements 1400B included in the driving element 1400B of the second column may be arranged to be spaced apart from each other along the first direction Z.

The driving element 1400A of the first column and the driving element 1400B of the second column may be arranged to be spaced apart from each other. Particularly, each driving element 1400A included in the driving element 1400A of the first column and each driving element 1400B included in the driving element 1400B of the second column may be arranged to be spaced apart from each other in the second direction Y. That is, the plurality of driving elements 1400A may be arranged in a zigzag pattern on the front surface 1210F of the substrate body 1210.

By this structure, the decrease in luminance due to the driving element 1400 may be prevented from being concentrated in a specific region, and the uniformity of the luminance of the display apparatus 1 may be improved.

Meanwhile, as illustrated in FIG. 10, because the plurality of driving elements 1400A and 1400B are mounted on the substrate body 1210 and arranged in a zigzag pattern along the first direction Z on the front surface 1210F of the substrate body 1210, layout of trace of a substrate 1200 connected to the plurality of driving elements 1400A and 1400B may be simplified.

That is, conventionally, the plurality of driving elements 1400 is arranged on both the substrate body 1210 and the plurality of substrate bars 1220 or only on the plurality of substrate bars 1220. Therefore, because the plurality of driving elements 1400 is scattered over the entire region of the substrate 1200, layout of trace of the plurality of driving elements 1400 is complex and the number of via holes for connecting traces is also large. However, as illustrated in FIG. 10, because the plurality of driving elements 1400-1 is mounted in groups only on the substrate body 1210 and is arranged in a zigzag pattern along the first direction Z of the substrate body 1210, the layout of the trace of the plurality of driving elements 1400-1 may be simplified.

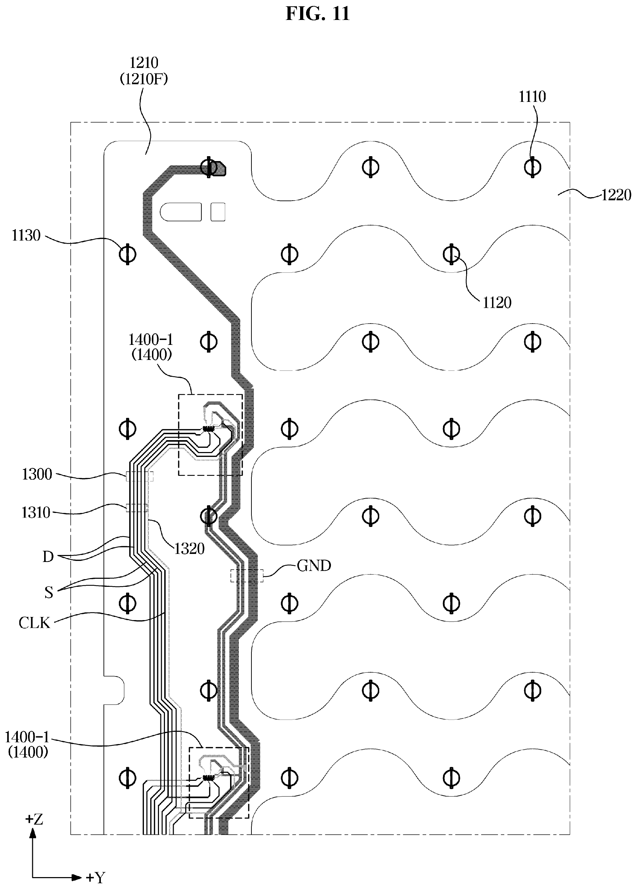

FIG. 11 is a view illustrating a signal line of a trace connected to driving elements of an example of the light source apparatus of the display apparatus according to an embodiment of the present disclosure.

Referring to FIG. 11, the plurality of driving elements 1400-1 may be arranged along the first direction Z on the front surface 1210F of the substrate body 1210. The plurality of driving elements 1400-1 may be arranged spaced apart from each other along the first direction Z on the front surface 1210F of the substrate body 1210.

The plurality of driving elements 1400-1 may be mounted in groups only on the substrate body 1210 to simplify the layout of the trace of the substrate 1200 connected to the plurality of driving elements 1400-1 and may be arranged in a line along the first direction Z on the front surface 1210F of the substrate body 1210.

The plurality of driving elements 1400-1 may be electrically connected to a trace 1300 formed on the substrate 1200. The plurality of driving elements 1400-1 may be electrically connected to the control assembly 50 and/or the power assembly 60 via the trace 1300 or the like.

The trace 1300 may be formed on the substrate 1200.

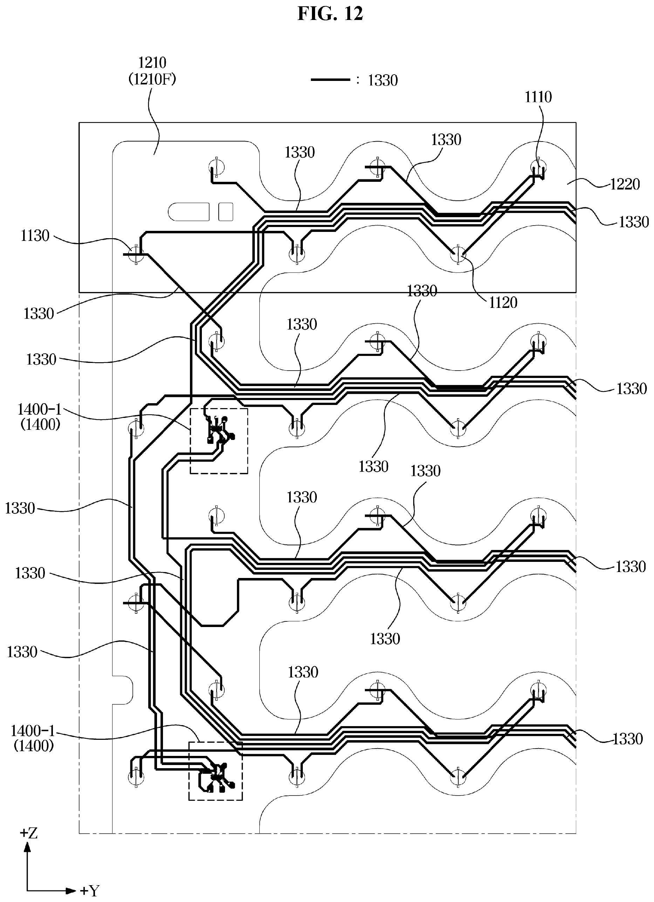

The trace 1300 may include a signal line 1310 and a control line 1330 (refer to FIG. 12).

The signal line 1310 may be formed on the substrate body 1210.

The signal line 1310 may be arranged along the first direction Z of the substrate body 1210.

The signal line 1310 may input an input signal such as a data signal, a scan signal, and a clock signal (timing signal) to the plurality of driving elements 1400-1. The signal line 1310 may be electrically connected to the plurality of driving elements 1400-1.

The signal line 1310 may include a data line D and a scan line S.

The data line D may provide a data signal to the plurality of driving elements 1400-1. The data signal may include a dimming signal.

The scan line S may provide a scan signal to the plurality of driving elements 1400-1.

The signal line 1310 may include a clock line CLK that provides a clock signal, which is a timing signal, to the plurality of driving elements 1400-1.

The plurality of driving elements 1400-1 may be mounted in groups only on the substrate body 1210. Accordingly, the signal line 1310 connected to the plurality of driving elements 1400-1 may be formed only on the substrate body 1210 and not on the plurality of substrate bars 1220. Accordingly, it is possible to simplify the layout of the signal line 1310 of the plurality of driving elements 1400-1. That is, because a space, in which design is restricted due to the intersection of the signal line 1310 and the control line 1330, is small on the substrate body 1210, the signal line such as the data line, the scan line, and the clock line that are commonly connected to the plurality of driving elements 1400-1 may be disposed in a straight line. Accordingly, it is possible to reduce the number of via holes for connecting traces and to alleviate the design difficulty, and thus it is possible to simplify the layout of the signal line 1310 of the plurality of driving elements 1400-1.

In addition, because the width W1 of the substrate body 1210 in the second direction Y is greater than the width W2 of each of the plurality of substrate bars 1220 in the first direction Z, complex signal lines may be arranged in a relatively wide space, thereby significantly alleviating the design difficulty.

In this way, by mounting the plurality of driving elements 1400-1 in groups only on the substrate body 1210 and forming the signal line 1310 connected to the plurality of driving elements 1400-1 on the substrate body 1210, the layout of the signal line 1310 of the plurality of driving elements 1400-1 may be simplified.

Further, the signal line 1310 may further include a power line 1320.

The power line 1320 may be formed in the substrate body 1210. The power line 1320 may include a ground line (GND) formed in the substrate body 1210.

The power line 1320 may be arranged along the first direction Z of the substrate body 1210.

The power line 1320 may supply power to each of the plurality of driving elements 1400-1.

In this way, as the power line 1320 connected to the plurality of driving elements 1400-1 is formed in the substrate body 1210 to provide power to the plurality of driving elements 1400-1, the layout of the power line 1320 of the plurality of driving elements 1400-1 may be simplified.

FIG. 12 is a view illustrating a control line of the trace connected to the driving elements of an example of the light source apparatus of the display apparatus according to an embodiment of the present disclosure.

Referring to FIG. 12, the control line 1330 may be formed on each of the substrate body 1210 and the plurality of substrate bars 1220.

The control line 1330 may be formed on the substrate body 1210 and the plurality of substrate bars 1220, and thus may connect the light sources 1130 (body light source) mounted on the substrate body 1210 and the light sources 1120 (second side light sources) mounted on the plurality of substrate bars 1220.

The control line 1330 may electrically connect each of the plurality of driving elements 1400-1 and the plurality of dimming blocks including at least one light source among the plurality of light sources 1100. The plurality of dimming blocks is dimming blocks controlled by the plurality of driving elements 1400-1.

The control line 1330 may include a trace provided to connect the plurality of light sources within the plurality of dimming blocks 200, and a trace provided to connect the driving element 1400-1 and the plurality of dimming blocks 200. Meanwhile, the control line 1330 may include only trace provided to connect the driving element 1400-1 and the plurality of dimming blocks 200.

In this way, because the plurality of driving elements 1400-1 is mounted in groups only on the substrate body 1210, only the control line 1330 among the signal line 1310 and the control line 1330 may be placed on the plurality of substrate bars 1220. Accordingly, it is possible to reduce the number of via holes for connecting the trace of the control line 1330 of the plurality of driving elements 1400-1, and thus it is possible to simplify the layout of the control line 1330 such as the layout design.

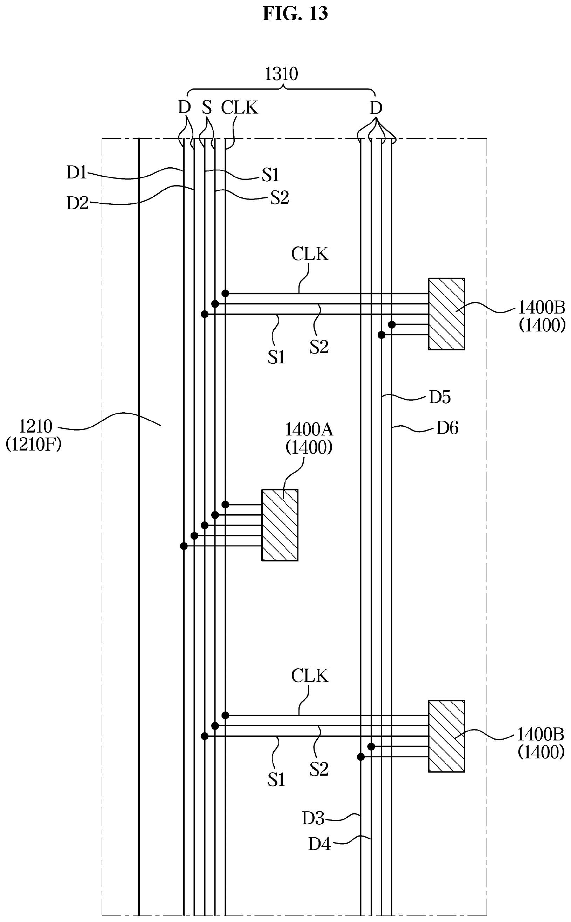

FIG. 13 is a view illustrating a signal line connected to driving elements of another example of a light source apparatus of a display apparatus according to an embodiment of the present disclosure.

In describing signal lines connected to driving elements of another example of a light source apparatus of a display apparatus according to an embodiment of the present disclosure with reference to FIG. 13, the same reference numerals may be given to configurations corresponding to the configurations of the embodiments described with reference to FIGS. 11 and 12, and descriptions thereof may be omitted.

Referring to FIG. 13, a plurality of driving elements 1400 may include a driving element 1400A in a first column and a driving element 1400B in a second column.

The driving element 1400A of the first column may be arranged along the first direction Z. Driving elements 1400A included in the driving element 1400A of the first column may be arranged to be spaced apart from each other along the first direction Z.

The driving element 1400B of the second column may be arranged along the first direction Z. Driving elements 1400B included in the driving element 1400B of the second column may be arranged to be spaced apart from each other along the first direction Z.

Each driving element 1400A included in the driving element 1400A of the first column and each driving element 1400B included in the driving element 1400B of the second column may be arranged to allow positions thereof in the second direction Y to be spaced apart from each other.

In order to simplify layout of trace of a substrate 1200 connected to the driving element 1400A of the first column and the driving element 1400B of the second column, the driving element 1400A of the first column and the driving element 1400B of the second column may be mounted in groups only on a substrate body 1210, and may be arranged in a zigzag pattern along the first direction Z on a front surface 1210F of the substrate body 1210.

The driving element 1400A of the first column and the driving element 1400B of the second column may be electrically connected to a signal line 1310 formed on the substrate 1200.

The signal line 1310 may be formed on the substrate body 1210 and arranged in at least one column along the first direction Z of the substrate body 1210.

The signal line 1310 may input an input signal such as a data signal, a scan signal, and a clock signal to the plurality of driving elements 1400A and 1400B. The signal line 1310 may be electrically connected to the plurality of driving elements 1400A and 1400B.

The signal line 1310 may include a data line D and a scan line S.

The data line D may provide a data signal to the plurality of driving elements 1400A and 1400B. The data signal may include a dimming signal.

The data line D may include data lines D1 and D2 in a first column arranged along the first direction Z, and data lines D3, D4, D5, and D6 in a second column spaced parallel to the data lines D1 and D2 of the first column.

Scan lines S1 and S2 may provide a scan signal to the plurality of driving elements 1400A and 1400B.

The scan lines S1 and S2 may be arranged adjacent to the data lines D1 and D2 of the first column.

The signal line 1310 may include a clock line CLK that provides a clock signal, which is a timing signal, to the plurality of driving elements 1400A and 1400B.

The clock line CLK may be arranged adjacent to the scan lines S1 and S2.

For example, as illustrated in FIG. 13, the data lines D1 and D2, scan lines S1 and S2, and clock lines CLK of a first column may be connected to the driving element 1400A of the first column, respectively.

The data lines D3, D4, D5, and D6, scan lines S1 and S2, and clock lines CLK of a second column may be connected to the driving element 1400B of the second column, respectively.

In this way, by mounting the plurality of driving elements 1400A and 1400B in groups only on the substrate body 1210 and forming the signal line 1310 connected to the plurality of driving elements 1400A and 1400B on the substrate body 1210, the layout of the signal line 1310 of the plurality of driving elements 1400A and 1400B may be simplified.

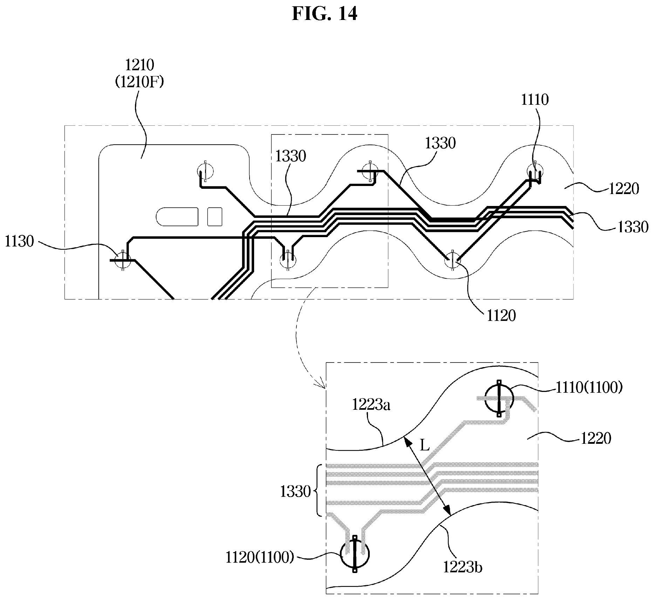

FIG. 14 is a view illustrating a trace width of the control line connected to the driving elements of the light source apparatus of the display apparatus according to an embodiment of the present disclosure.

Referring to FIG. 14, because the plurality of driving elements 1400 is mounted in groups only on the substrate body 1210, only the control line 1330 among the signal line 1310 and the control line 1330 may be placed on the plurality of substrate bars 1220.

In the related art, because the plurality of driving elements 1400 is mounted on the plurality of substrate bars 1220, not only the control line 1330 but also the signal line 1310 are arranged together. As a result, because it is required that the layout of the signal line 1310 and the control line 1330 be formed on the plurality of substrate bars 1220, the layout becomes complicated, the number of via holes increases, and the layout design becomes complicated.

However, because the plurality of driving elements 1400 is not mounted on the plurality of substrate bars 1220 of the present disclosure, there is no need to provide the signal line 1310. Therefore, the plurality of substrate bars 1220 may be designed by simply considering the control line 1330. Accordingly, it is possible to simplify the layout of the control line 1330, such as reducing the number of via holes in the plurality of substrate bars 1220 and simplifying the layout design.

In addition, because the signal line 1310 is not provided and the control line 1330 is mounted on the plurality of substrate bars 1220, the width of the plurality of substrate bars 1220 may be reduced. For example, a minimum distance between a first recess portion 1223a and a second recess portion 1223b forming a region, through which the control line 1330 passes, in the plurality of substrate bars 1220 may be determined based on the number of traces and a trace width of the control line 1330.

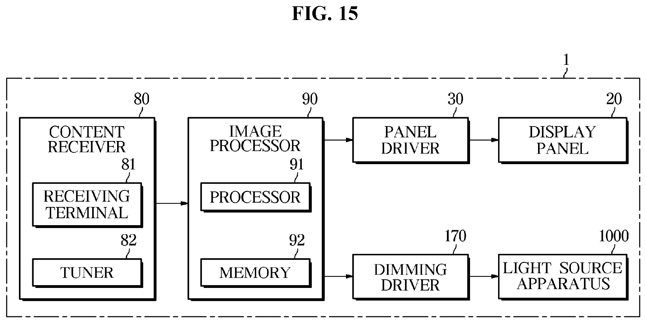

FIG. 15 is a control block diagram of the display apparatus according to an embodiment of the present disclosure.

Referring to FIG. 15, the display apparatus 1 may include a content receiver 80, an image processor 90, the panel driver 30, the display panel 20, a dimming driver 170, and the light source apparatus 1000.

The content receiver 80 may include a receiving terminal 81 and a tuner 82 configured to receive content including video signals and/or audio signals from content sources.

The receiving terminal 81 may receive video signals and audio signals from content sources via a cable. For example, the receiving terminal 81 may include a component (YPbPr/RGB) terminal, a composite video blanking and sync (CVBS) terminal, an audio terminal, a High-Definition Multimedia Interface (HDMI) terminal, a Universal Serial Bus (USB) terminal, and the like.

The tuner 82 may receive broadcast signals from a broadcast reception antenna or a wired cable. In addition, the tuner 82 may extract broadcast signals of a channel selected by a user from among the broadcast signals. For example, the tuner 82 may pass broadcast signals having a frequency corresponding to the channel selected by the user among a plurality of broadcast signals received through a broadcast reception antenna or a wired cable, and block broadcast signals having other frequencies.

In this way, the content receiver 80 may receive video signals and audio signals from content sources through the receiving terminal 81 and/or the tuner 82. The content receiver 80 may output the video signals and/or audio signals received through the receiving terminal 81 and/or the tuner 82 to the image processor 90.

The image processor 90 may include a processor 91 configured to process image data and a memory 92 configured to memorize/store a program and data for processing the image data.

The memory 92 may store programs and data for processing video signals and/or audio signals. In addition, the memory 92 may temporarily store data generated while processing the video signals and/or audio signals.

The memory 92 may include non-volatile memory such as Read Only Memory (ROM) and flash memory, and volatile memory such as Static Random Access Memory (S-RAM) and Dynamic Random Access Memory (D-RAM).

The processor 91 may receive a video signal and/or an audio signal from the content receiver 80. The processor 91 may decode the video signal into image data. The processor 91 may generate dimming data from the image data. In addition, the processor 91 may output the image data and dimming data to the panel driver 30 and the dimming driver 170, respectively.

In this way, the image processor 90 may generate image data and dimming data from the video signal obtained by the content receiver 80. In addition, the image processor 90 may transmit the image data and dimming data to the display panel 20 and the light source apparatus 1000, respectively.

The image data may include information regarding an intensity of light transmitted by each of the plurality of pixels (or the plurality of sub-pixels) included in the display panel 20. The image data may be provided to the display panel 20 via the panel driver 30.

The display panel 20 includes the plurality of pixels capable of transmitting or blocking light, and the plurality of pixels is arranged in a matrix shape. In other words, the plurality of pixels may be arranged in a plurality of rows and a plurality of columns.

The panel driver 30 may receive image data from the image processor 90. The panel driver 30 may drive the display panel 20 according to the image data. In other words, the panel driver 30 may convert image data, which is a digital signal (hereinafter referred to as "digital image data"), into an analog image signal, which is an analog voltage signal. The panel driver 30 may provide the analog image signal to the display panel 20. Depending on the analog image signal, optical properties (for example, light transmittance) of the plurality of pixels included in the display panel 20 may change.

The panel driver 30 may include a timing controller, a data driver, and a scan driver.

The timing controller may receive image data from the image processor 90. The timing controller may output image data and a driving control signal to the data driver and the scan driver. The driving control signal may include a scan control signal and a data control signal. The scan control signal and the data control signal may be used to control the operation of the scan driver and the operation of the data driver, respectively.

The scan driver may receive a scan control signal from the timing controller. The scan driver may activate input of any one of a plurality of rows on the display panel 20 according to the scan control signal. In other words, the scan driver may convert pixels, which are included in any one row among a plurality of pixels arranged in a plurality of rows and a plurality of columns, into a state capable of receiving an analog image signal. At this time, pixels other than the pixels in which input is activated by the scan driver may not receive an analog image signal.

The data driver may receive image data and a data control signal from the timing controller. The data driver may output the image data to the display panel 20 according to the data control signal. For example, the data driver may receive digital image data from the timing controller. The data driver may convert the digital image data into an analog image signal. In addition, the data driver may provide an analog image signal to pixels included in a row that is inputactivated by the scan driver. At this time, the pixels in which input is activated by the scan driver may receive the analog image signal. Optical properties (for example, light transmittance) of the pixels, in which input is activated, change according to the received analog image signal.

As mentioned above, the panel driver 30 may drive the display panel 20 according to the image data. As a result, an image corresponding to the image data may be displayed on the display panel 20.

In an embodiment, the dimming data may include information regarding an intensity of light emitted by each of the plurality of light sources 1100 (or the plurality of dimming blocks 200) included in the light source apparatus 1000. The dimming data may be provided to the light source apparatus 1000 via the dimming driver 170.

The light source apparatus 1000 may include the plurality of light sources 1100 configured to emit light. The plurality of light sources 1100 are arranged in a matrix shape. In other words, the plurality of light sources 1100 may be arranged in a plurality of rows and a plurality of columns.

The light source apparatus 1000 may be divided into a plurality of dimming blocks 200. In addition, each of the plurality of dimming blocks 200 may include at least one light source.

The light source apparatus 1000 may output surface light by diffusing light emitted from the plurality of light sources 1100. The display panel 20 may include a plurality of pixels, and each of the plurality of pixels may be controlled to allow light to pass through or block light. An image may be formed by light passing through each of the plurality of pixels.

At this time, the light source apparatus 1000 may turn off the plurality of light sources corresponding to dark portions of the image to darken the dark portions of the image. As a result, the dark portions of the image become darker, thereby improving the contrast ratio of the image.

In this way, an operation, in which the light source apparatus 1000 controls the plurality of light sources to emit light in a region corresponding to a bright portion of the image and controls the plurality of light sources not to emit light in a region corresponding to a dark portion of the image, is referred to as "local dimming" below.

For the local dimming, the plurality of light sources 1100 included in the light source apparatus 1000 may be divided into a plurality of dimming blocks 200. The number and arrangement of the dimming blocks are not limited thereto.

Each of the plurality of dimming blocks 200 may include at least one light source 1100. The light source apparatus 1000 may supply the same driving current to the light sources belonging to the same dimming block 200, and the light sources belonging to the same dimming block 200 may emit light of the same brightness. For example, the light sources belonging to the same dimming block 200 may be connected in series with each other, and thus the same driving current may be supplied to the light sources belonging to the same dimming block 200.

In addition, the light source apparatus 1000 may include the plurality of driving elements 1400 configured to control driving currents supplied to light sources included in each of the plurality of dimming blocks 200. The driving elements 1400 may be provided to correspond to at least one dimming block 200, respectively. In other words, the driving elements 1400 may each drive the dimming blocks 200.

The driving element 1400 may be a driving integrated circuit chip for driving the plurality of dimming blocks 200.

In this way, because the light sources 1100 belonging to the dimming block 200 are connected to each other in series, the light sources 1100 included in the dimming block 200 operate as one unit and may form a light source block as one unit.

Therefore, hereinafter "supplying driving current to the dimming block" may be interpreted as having the same meaning as "supplying driving current to the light sources included in the dimming block." For example, the dimming block may include 12 light sources, but the number and arrangement of the light sources included in each of the dimming blocks are not limited thereto.

As described above, the image processor 90 may provide dimming data for local dimming to the light source apparatus 1000. The dimming data may include information regarding the luminance of each of the plurality of dimming blocks 200. For example, the dimming data may include information regarding an intensity of light output by the light sources included in each of the plurality of dimming blocks 200.

The image processor 90 may obtain dimming data from image data.

The image processor 90 may convert image data into dimming data in various ways. For example, the image processor 90 may divide the image I by the image data into a plurality of image blocks. The number of the plurality of image blocks may be equal to the number of the plurality of dimming blocks 200, and each of the plurality of image blocks may correspond to the plurality of dimming blocks 200.

The image processor 90 may obtain luminance values of the plurality of dimming blocks 200 from the image data of the plurality of image blocks. In addition, the image processor 90 may generate dimming data by combining the luminance values of the plurality of dimming blocks 200.

For example, the image processor 90 may obtain a luminance value of each of the plurality of dimming blocks 200 based on a maximum value among the luminance values of the pixels included in each of the image blocks.

A single image block may include a plurality of pixels, and image data of one image block may include image data of a plurality of pixels (for example, red data, green data, and blue data). The image processor 90 may calculate the luminance value of each pixel based on the image data of each pixel.

The image processor 90 may set a maximum value among luminance value of each pixel included in the image block as a luminance value of the dimming block 200 corresponding to the image block. For example, the image processor 90 may set a maximum value among luminance values of pixels included in an i^{th} image block as a luminance value of an i^{th} dimming block, and may set a maximum value among luminance values of pixels included in a j^{th} image block as a luminance value of a j^{th} dimming block.

The image processor 90 may generate dimming data by combining the luminance values of the plurality of dimming blocks 200.

The dimming driver 170 may receive dimming data from the image processor 90. The dimming driver 170 may drive the light source apparatus 1000 according to the dimming data. The dimming data may include information about the luminance of each of the plurality of dimming blocks 200 or information about the brightness of the light sources included in each of the plurality of dimming blocks 200.

The dimming driver 170 may include a timing controller, a data driver, and a scan driver.

The dimming driver 170 may convert dimming data, which is a digital voltage signal, into an analog driving current.

The dimming driver 170 may sequentially provide an analog dimming signal to the driving elements 1400 corresponding to each of the dimming blocks 200 in an active-matrix manner.

The plurality of dimming blocks 200 may be divided into a plurality of groups. For example, three dimming blocks 200 may form one group. Dimming blocks 200 belonging to the same group may be supplied with driving current simultaneously, and dimming blocks 200 belonging to different groups may be supplied with driving current sequentially at different times. The dimming driver 170 may activate the dimming blocks 200 belonging to any one of the plurality of groups and provide an analog dimming signal to the activated dimming blocks 200. Thereafter, the dimming driver 170 may activate the dimming blocks 200 belonging to another group and provide an analog dimming signal to the activated dimming blocks 200.

The dimming driver 170 may activate dimming blocks 200 belonging to one group and provide an analog dimming signal to the activated dimming blocks 200. Thereafter, the dimming driver 170 may activate inputs of dimming blocks 200 belonging to another row and provide an analog dimming signal to the dimming blocks 200 in which input is activated.

To activate dimming blocks 200 belonging to any one of the plurality of groups, the dimming driver 170 may transmit a driving signal to the driving element 1400. The driving signal may be a signal for supplying power to the driving element 1400.

According to various embodiments, the driving signal may be transmitted directly from the dimming driver 170 to each of the plurality of dimming blocks 200, or may be transmitted from the driving element 1400 to each of the plurality of dimming blocks 200.

The driving circuit of each of the dimming blocks 200 may provide an analog driving current corresponding to an analog dimming signal to the light source apparatus 1000. By the analog driving current, the light sources 1100 included in the light source apparatus 1000 may emit light. Depending on the dimming data, the light sources belonging to the same dimming block 200 may emit light of the same intensity. Additionally, depending on the dimming data, the light sources belonging to different dimming blocks 200 may emit light of different intensities.

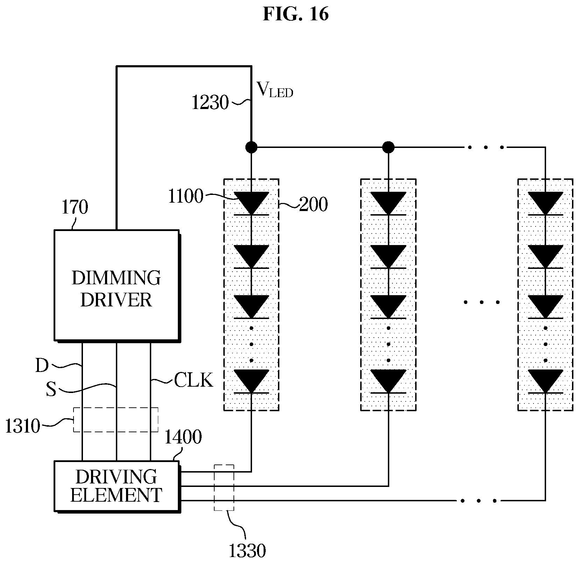

FIG. 16 is a view illustrating an example of a connection structure of a dimming driver, a driving element, and a dimming block of the display apparatus according to an embodiment of the present disclosure.

Referring to FIG. 16, each of the plurality of dimming blocks 200 may include a plurality of light sources 1100 connected in series with each other.

For example, each of the plurality of dimming blocks 200 may be supplied with a driving voltage V_{LED} through the power trace 1230. The power trace 1230 may be a power line 1320 configured to supply power to the driving element 1400, or a trace branched from the power line 1320.

For example, each of the plurality of dimming blocks 200 may be electrically connected to the driving element 1400 through the control line 1330 of the driving element 1400. The driving element 1400 may control the driving current flowing to each of the plurality of dimming blocks 200 through the control line 1330.

When it is assumed that one dimming block 200 includes a first LED, a second LED, a third LED, and a fourth LED, an anode of the first LED may be connected to the power trace 1230, a cathode of the first LED may be connected to an anode of the second LED, a cathode of the second LED may be connected to an anode of the third LED, a cathode of the third LED may be connected to an anode of the fourth LED, and a cathode of the fourth LED may be connected to the driving element 1400 via the control line 1330.

That is, among the plurality of light sources 1100 connected in series and included in one dimming block 200, the first light source (first LED) 1100 of the series connection may be connected to the power trace 1230 to receive a driving voltage V_{LED}, and the last light source (fourth LED) 1100 of the series connection may be connected to the driving element 1400 through the control line 1330.

While the driving element 1400 is activated by the dimming driver 170, the driving element 1400 may receive an analog dimming signal from the dimming driver 170 and store the received analog dimming signal. In addition, while the driving element 1400 is deactivated, the plurality of driving elements 1400 may supply a driving current corresponding to the stored analog dimming signal to the plurality of light sources 1100.

The driving element 1400 may control the driving current supplied to each of the plurality of dimming blocks 200 through the control line 1330 while the driving voltage V_{LED} is applied to the plurality of dimming blocks 200.

The plurality of driving elements 1400 may be connected to the signal line 1310 configured to provide an input signal to the plurality of driving elements 1400. The signal line 1310 may include the data line D configured to provide an analog dimming signal to the plurality of driving elements 1400, the scan line S configured to provide a scan signal to the plurality of driving elements 1400, and/or the clock line CLK configured to provide a clock signal, which is a timing signal, to the plurality of driving elements 1400.

The plurality of driving elements 1400 may include circuits of various topologies to implement active matrix driving.

For example, each of the plurality of driving elements 1400 may include a circuit of one capacitor two transistor (1C2T) topology. However, the circuit structure of the driving element 1400 is not limited thereto. For example, the driving element 1400 may include a circuit of a 3T1C topology with an additional transistor for compensating the body effect of the driving transistor.

The driving element 1400 may be provided as a single chip with an integrated driving circuit. In other words, the driving circuit may be integrated into a single semiconductor chip.

The dimming driver 170 may transmit a data signal, which is a dimming signal corresponding to an input image, to the plurality of driving elements 1400 through the data line D.

Additionally, the dimming driver 170 may transmit scan signals to the plurality of driving elements 1400 through the scan line S.

In addition, the dimming driver 170 may transmit a clock signal corresponding to a light-emitting timing of the plurality of dimming blocks 200 to the plurality of driving elements 1400 through the clock line CLK.

The plurality of driving elements 1400 may control the driving current supplied to each of a plurality of dimming blocks 200 based on a data signal, a scan signal, and/or a clock signal.

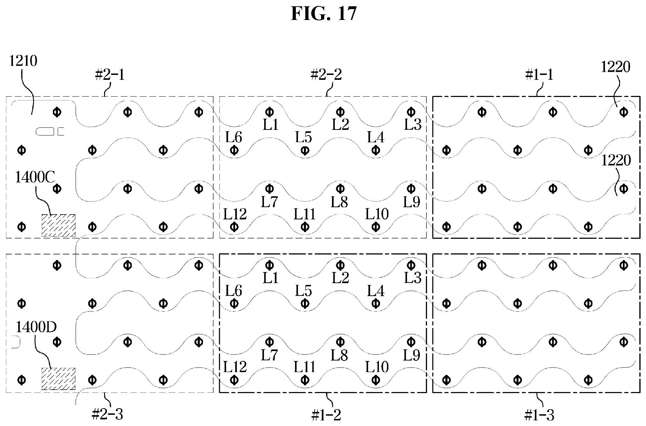

FIG. 17 is a view illustrating an example of the connection structure of the driving element and the dimming block of the light source apparatus of the display apparatus according to an embodiment of the present disclosure.

Referring to FIG. 17, the plurality of dimming blocks 200 may be divided into a first group (#1-1, #1-2, and #1-3) and a second group (#2-1, #2-2, and #2-3).

The plurality of driving elements 1400 may include a first driving element 1400C and a second driving element 1400D.

The first driving element 1400C may control first light sources included in dimming blocks of the first group (#1-1, #1-2, and #1-3).

The second driving element 1400D may control second light sources included in dimming blocks of the second group (#2-1, #2-2, and #2-3).

The first group (#1-1, #1-2, and #1-3) may include a dimming block including first light sources L1 to L12 connected in series among the plurality of light sources 1100.

The first light sources L1 to L12 may include light sources mounted on two adjacent substrate bars 1220 among the plurality of substrate bars 1220.

The second group (#2-1, #2-2, and #2-3) may include a dimming block including second light sources L1 to L12 connected in series among the plurality of light sources 1100.

The second light sources L1 to L12 may include light sources mounted on two adjacent substrate bars 1220 among the plurality of substrate bars 1220.

For example, the arrangement of dimming blocks belonging to the same group and light sources within the same dimming block may vary, and the method of defining groups is not limited thereto.

In this way, by mounting the plurality of driving elements 1400 in groups only on the substrate body 1210, the layout of the signal line 1310 and the control line 1330 connected to the plurality of driving elements 1400 may be simplified, and design diversification may be realized without the need to limit the location of the same group of dimming blocks 200 controlled by the same driving element 1400 to a specific substrate bar 1220. Further, the combination of light sources within the same dimming block 200 may be expanded to light sources mounted on adjacent substrate bars 1220 without the need to limit the combination of light sources within one substrate bar 1220, thereby further realizing design diversification.

FIG. 17 illustrates only some of the plurality of dimming blocks 200. The display apparatus 1 according to an embodiment may include more dimming blocks 200 and driving elements 1400 for the local dimming. In addition, the display apparatus 1 requires the signal line 1310 (data line D, scan line S, clock line CLK, and/or power line 1320) and the control line 1330 connecting the dimming blocks 200 and the driving elements 1400.

Accordingly, it is required to simplify the arrangement of the signal line 1310 and the control line 1330 on the substrate 1200. For example, when the signal line 1310 and the control line 1330 cross each other on the substrate 1200, the circuit complexity may increase.

However, the display apparatus 1 according to an embodiment of the present disclosure may simplify the layout of the signal line 1310 of the plurality of driving elements 1400 by mounting the plurality of driving elements 1400 in groups only on the substrate body 1210 and forming the signal line 1310 connected to the plurality of driving elements 1400 on the substrate body 1210. In addition, because only the control line 1330 among the signal line 1310 and the control line 1330 is arranged on the plurality of substrate bars 1220, the layout of the control line 1330 may be simplified, such as reducing the number of via holes for connecting traces of the control line 1330 of the plurality of driving elements 1400-1 and simplifying the layout design.

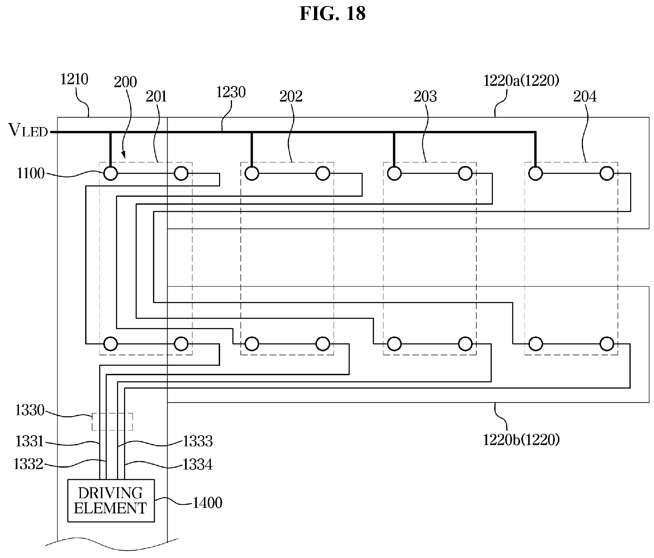

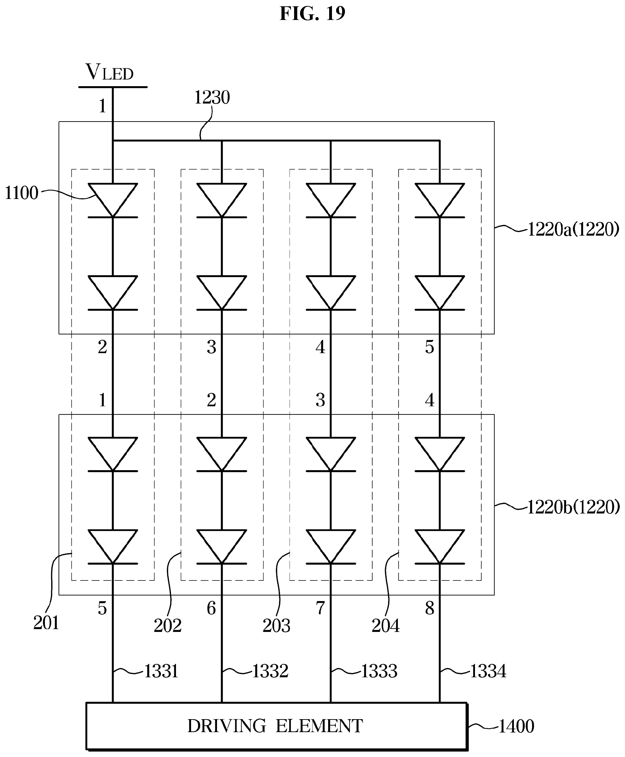

FIG. 18 is a view illustrating an example of a connection structure of a driving element and a dimming block of a display apparatus according to another embodiment of the present disclosure. FIG. 19 is a simplified view of the connection structure of the driving element and the dimming block illustrated in FIG. 18.

Referring to FIGS. 18 and 19, each of the plurality of dimming blocks 200 may include a plurality of light sources 1100 connected in series with each other. For example, the plurality of dimming blocks 200 may include four dimming blocks 201, 202, 203, and 204.

Each of the four dimming blocks 201, 202, 203, and 204 may include light sources 1100 connected in series with each other. Each of the four dimming blocks 201, 202, 203, and 204 may be driven by the same driving element 1400.

Light sources belonging to each of the four dimming blocks 201, 202, 203, and 204 may be arranged across two adjacent substrate bars 1220a and 1220b.

Each of the four dimming blocks 201, 202, 203, and 204 may be electrically connected to the driving element 1400 via the control line 1330 of the driving element 1400. The driving element 1400 may control the driving current flowing to each of the plurality of dimming blocks 200 via the control line 1330.

Each of the four dimming blocks 201, 202, 203, and 204 may be supplied with a driving voltage V_{LED} through the power trace 1230.

The power trace 1230 may be provided only on one of the two adjacent substrate bars 1220a and 1220b forming each dimming block 200.

The power trace 1230 may be connected to the anode of the first light source (first LED) 1100 of each dimming block 200. For example, the power trace 1230 may be provided only on the first substrate bar 1220a among the two substrate bars 1220a and 1220b.

For example, when it is assumed that the first dimming block 201 includes a first LED, a second LED, a third LED, and a fourth LED, the anode of the first LED may be connected to the power trace 1230, the cathode of the first LED may be connected to the anode of the second LED, the cathode of the second LED may be connected to the anode of the third LED, the cathode of the third LED may be connected to the anode of the fourth LED, and the cathode of the fourth LED may be connected to the driving element 1400 via a first control line 1331.

That is, among the four light sources 1100 connected in series and included in the first dimming block 201, the first light source (first LED) 1100 of the series connection may be connected to the power trace 1230 to receive a driving voltage V_{LED}, and the last light source (fourth LED) 1100 of the series connection may be connected to the driving element 1400 through the first control line 1331.

The second dimming block 202 to the fourth dimming block 204 may be connected in the same manner as the first dimming block 201.

As illustrated in FIG. 19, five traces may be provided on the first substrate bar 1220a provided with the power trace 1230, and eight traces may be provided on the second substrate bar 1220b.

The LEDs of the two substrate bars 1220a and 1220b need to be connected to each other in a structure where one dimming block is arranged across the two substrate bars 1220a and 1220b, and thus a plurality of traces needs to pass through the two substrate bars 1220a and 1220b. Accordingly, traces 1 to 4 entering the LED and traces 5 to 8 exiting the LED may be arranged on one of the two substrate bars 1220a and 1220b, and the power trace 1230 corresponding to the common trace and traces 2 to 5 exiting the LED may be arranged on the other substrate bar 1220a.

For example, it is required that five traces 1 to 5 pass through the first substrate bar 1220a, and eight traces 1 to 8 pass through the second substrate bar 1220b. In this case, because the width of the substrate bar needs to be determined according to the number of traces (8 traces), an area of the printed circuit board (PCB) increases, which may increase the cost of the printed circuit board.

Therefore, by minimizing the number of traces passing through the substrate bar, the trace width of the substrate bar may be minimized, the layout of the trace may be simplified, and the cost of the printed circuit board may be reduced, and operational stability may be ensured.

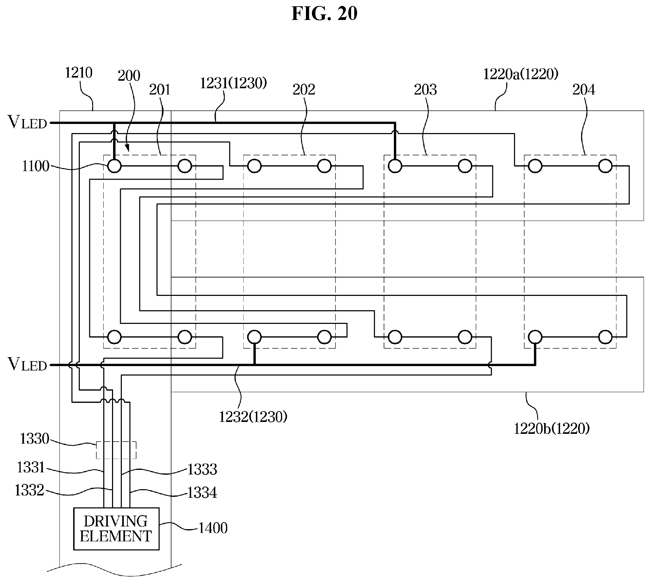

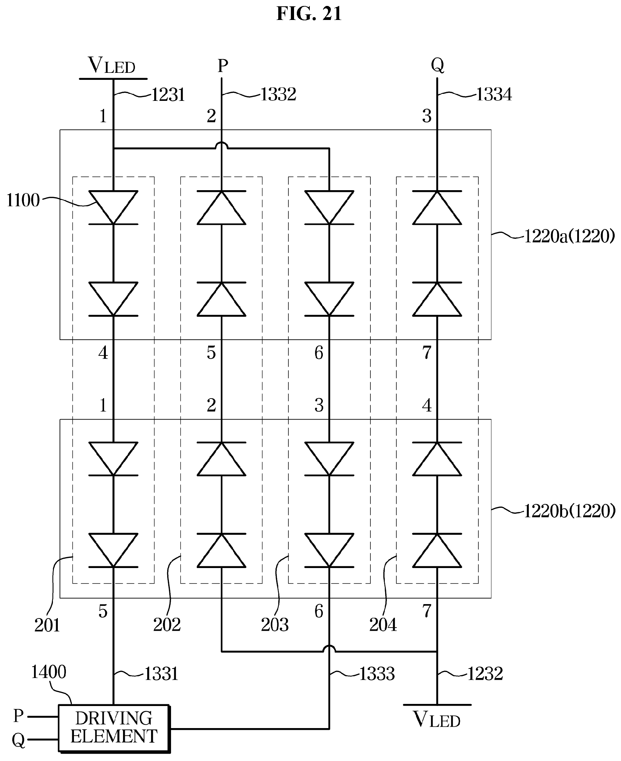

FIG. 20 is a view illustrating an example of a connection structure of a driving element and a dimming block of a display apparatus according to another embodiment of the present disclosure. FIG. 21 is a simplified view of the connection structure of the driving element and the dimming block illustrated in FIG. 20.

Referring to FIGS. 20 and 21, a power trace 1230 may include a first power trace 1231 and a second power trace 1232.

The first power trace 1231 may be provided on a first substrate bar 1220a, and the second power trace 1232 may be provided on a second substrate bar 1220b.

The first power trace 1231 may be provided on the first substrate bar 1220a and connected to an anode of a first light source (first LED) 1100 of a series connection among four light sources of a first dimming block 201, and may be connected to an anode of a first light source (first LED) 1100 of a series connection among four light sources of a third dimming block 203. A last light source (fourth LED) 1100 of the series connection of the first dimming block 201 may be connected to a driving element 1400 via a first control line 1331. A last light source (fourth LED) 1100 of the series connection of the third dimming block 203 may be connected to the driving element 1400 via a third control line 1333.

The second power trace 1232 may be provided on the second substrate bar 1220b and connected to an anode of the first light source (first LED) 1100 of a series connection among four light sources of a second dimming block 202, and may be connected to an anode of a first light source (first LED) 1100 of a series connection among four light sources of a fourth dimming block 204. A last light source (fourth LED) 1100 of the series connection of the second dimming block 202 may be connected to the driving element 1400 via a second control line 1332. A last light source (fourth LED) 1100 of the series connection of the fourth dimming block 204 may be connected to the driving element 1400 via a fourth control line 1334.

As illustrated in FIG. 21, seven traces 1 to 7 may be provided on the first substrate bar 1220a provided with the power trace 1230, and seven traces 1 to 7 may be provided on the second substrate bar 1220b.

Accordingly, because it is difficult to reduce the total number of traces provided on the substrate bar 1220, the maximum number of traces provided on one substrate bar 1220a or 1220b may be reduced by allowing the number of traces provided on two substrate bars 1220a and 1220b to be the same, thereby reducing the thickness of the substrate bar 1220a or 1220b. For this, the power trace 1230 connected to the dimming block is not arranged on only one substrate bar 1220a or 1220b, but is arranged alternately on two substrate bars 1220a and 1220b, thereby allowing the number of traces provided on the two substrate bars 1220a and 1220b to be the same, thereby reducing the maximum number of traces.

As described above, there is a need to reduce the area of the PCB of the display apparatus using the finger-type PCB composed of the substrate body 1210 and the plurality of substrate bars 1220 so as to reduce a price of the PCB. At this time, because the dimming block of the printed circuit board is across two adjacent substrate bars, it is required that a large number of traces be connected to the substrate bars. Because there is a limit that the trace width and the trace spacing may be reduced, as the number of traces increases, the width of the substrate bars increases. As the trace width increases, the amount, by which the area of the PCB is reduced, decreases, and thus the amount of reduction in cost of PCB decreases, which reduces the advantage of the finger-type PCB.

When the display apparatus according to an embodiment of the present disclosure is applied, the maximum number of traces connected to a single substrate bar is reduced, thereby reducing the width of the substrate bar. Further, because the number of traces is reduced, the layout of the trace arranged on the substrate bar is simplified, thereby increasing the trace spacing between traces, which may help improve signal integrity.

For example, when the trace width of the substrate bar is 0.5 mm and the trace spacing is also 0.5 mm, a width of 8 mm is required for 8 traces to pass therethrough. When the display apparatus according to an embodiment of the present disclosure is applied, 8 traces of the substrate bar may be reduced to 7 traces, and thus the width of the substrate bar is reduced from 8 mm to 7 mm. When it is assumed that the length of the substrate bar is 200 mm and the number of substrate bars is 6, the area of the substrate bar may be reduced by approximately 15% from 9600 mm² to 8400 mm².

A display apparatus 1 according to an embodiment of the present disclosure may include an image display portion 20; and a light source apparatus 1000. The light source apparatus 1000 may include a substrate 1200 including a substrate body 1210 extending along a first direction Z, and a plurality of substrate bars 1220 extending in a second direction Y from the substrate body 1210 and spaced apart from each other along the first direction Z; a plurality of light sources 1100 provided on the substrate body 1210 and the plurality of substrate bars 1220 and configured to emit light toward the image display portion 20; a plurality of dimming blocks 200 including at least one light source among the plurality of light sources 1100; a plurality of driving elements 1400 provided only on the substrate body 1210 among the substrate body 1210 and the plurality of substrate bars 1220, and configured to drive the plurality of dimming blocks 200; and a signal line 1310 formed on the substrate body 1210 and connected to the plurality of driving elements 1400. The signal line 1310 may include a data line for transmitting a data signal to the plurality of driving elements 1400, a scan line for transmitting a scan signal to the plurality of driving elements 1400, and a power line for supplying power to the plurality of driving elements 1400.

Some of the plurality of light sources 1100 may be respectively provided on the substrate body 1210, and the remainder of the plurality of light sources 1100 may be respectively provided on the plurality of substrate bars 1220.

Each of the plurality of driving elements 1400 and the signal line 1310 may be arranged along the first direction Z of the substrate body 1210.

The plurality of driving elements 1400 may be arranged to allow positions thereof in the first direction Z to be different from each other but some of the driving elements 1400 among the plurality of driving elements 1400 may be arranged to allow positions thereof in the second direction Y to be different from positions of other driving elements 1400 among the plurality of driving elements 1400.

The plurality of driving elements 1400 may include a driving element 1400 of a first column arranged along the first direction Z, and a driving element 1400 of a second column spaced apart from the driving elements 1400 of the first column and arranged along the first direction Z. Each driving element 1400 included in the driving element 1400 of the first column and each driving element 1400 included in the driving element 1400 of the second column may be arranged to allow positions thereof in the second direction Y to be spaced apart from each other.

The plurality of driving elements 1400 may be arranged to allow positions thereof in the first direction Z to be different from each other, but the plurality of driving elements 1400 may be arranged to allow positions thereof in the second direction Y to be the same.

The signal line 1310 may further include a clock line for transmitting a clock signal to the plurality of driving elements 1400.

The plurality of dimming blocks 200 may be divided into a first group and a second group. The plurality of driving elements 1400 may include a first driving element 1400 and a second driving element 1400. The first driving element 1400 may control first light sources included in dimming blocks of the first group, and the second driving element 1400 may control second light sources included in dimming blocks of the second group.

The first group may include a first dimming block including first light sources connected in series among the plurality of light sources. The first light sources may be provided on two adjacent substrate bars 1220 among the plurality of substrate bars 1220.

The plurality of dimming blocks 200 may include a first dimming block including first light sources connected in series to each other among the plurality of light sources, and a second dimming block including second light sources connected in series to each other among the plurality of light sources. Each of the first dimming block and the second dimming block may be provided on two adjacent substrate bars among the plurality of substrate bars.

The display apparatus may further include a control line formed on the substrate and provided to electrically connect one of the plurality of driving elements to the first dimming block and to electrically connect one of the plurality of driving elements to the second dimming block, and a power trace provided to supply power to the first dimming block and the second dimming block. Only the control line and the power trace among the signal line, the control line, and the power trace may be provided on the plurality of substrate bars.

The power trace may include a first power trace provided on a first substrate bar among two adjacent substrate bars, and a second power trace provided on a second substrate bar. The first power trace may supply power to the first dimming block, and the second power trace may supply power to the second dimming block.

A width of the plurality of substrate bars may be determined based on the number of traces of the control line and the power trace, and trace widths of the control line and the power trace.

Each of the plurality of substrate bars 1220 may include a central extending portion 1221 extending in a second direction Y different from the first direction Z; a plurality of first protruding portions 1222a each protruding from one side of the central extending portion 1221 in the first direction Z toward an outside of the central extending portion 1221, arranged along the second direction Y, and provided with some of the plurality of light sources 1100; a plurality of first recess portions 1223a each formed between a pair of adjacent first protruding portions 1222a among the plurality of first protruding portions 1222a; a plurality of second protruding portions 1222b each protruding from the other side of the central extending portion 1221 in the first direction Z toward the outside of the central extending portion 1221, arranged along the second direction Y, the plurality of second protruding portions in which others of the plurality of light sources 1100 are mounted; and a plurality of second recess portions 1223b formed between a pair of adjacent second protruding portions 1222b among the plurality of second protruding portions 1222b. A shape of an edge of each of the plurality of first recess portions 1223a may be different from a shape of an edge of each of the plurality of second protruding portions 1222b. A shape of an edge of each of the plurality of second recess portions 1223b may be different from a shape of an edge of each of the plurality of first protruding portions 1222a.

A light source apparatus 1000 according to an embodiment of the present disclosure may include a substrate 1200 including a substrate body 1210 extending along a first direction Z, and a plurality of substrate bars 1220 extending in a second direction Y from the substrate body 1210 and spaced apart from each other along the first direction Z; a plurality of light sources 1100 provided on the substrate body 1210 and the plurality of substrate bars 1220; a plurality of dimming blocks 200 including at least one light source among the plurality of light sources 1100; a plurality of driving elements 1400 provided only on the substrate body among the substrate body and the plurality of substrate bars, and configured to drive the plurality of dimming blocks; and a signal line 1310 formed on the substrate body 1210 and connected to the plurality of driving elements 1400. The signal line 1310 may include a data line for transmitting a data signal to the plurality of driving elements 1400, a scan line for transmitting a scan signal to the plurality of driving elements 1400, and a power line for supplying power to the plurality of driving elements.

Each of the plurality of driving elements 1400 and the signal line may be arranged along the first direction Z of the substrate body 1210.

The plurality of driving elements 1400 may include a driving element 1400A of a first column arranged along the first direction Z, and a driving element 1400B of a second column spaced apart from the driving element 1400A of the first column and arranged along the first direction Z. Each driving element 1400 included in the driving element 1400A of the first column and each driving element 1400 included in the driving element 1400B of the second column may be arranged to allow positions thereof in the second direction Y to be spaced apart from each other.

The plurality of dimming blocks may include a first dimming block including first light sources connected in series to each other among the plurality of light sources, and a second dimming block including second light sources connected in series to each other among the plurality of light sources. Each of the first dimming block and the second dimming block may be provided on two adjacent substrate bars among the plurality of substrate bars.

The light source apparatus may further include a control line formed on the substrate and provided to electrically connect one of the plurality of driving elements to the first dimming block and to electrically connect one of the plurality of driving elements to the second dimming block; and a power trace provided to supply power to the first dimming block and the second dimming block. Only the control line and the power trace among the signal line, the control line, and the power trace may be provided on the plurality of substrate bars.

The power trace may include a first power trace provided on a first substrate bar among two adjacent substrate bars, and a second power trace provided on a second substrate bar. The first power trace may supply power to the first dimming block, and the second power trace may supply power to the second dimming block.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

The computer- readable recording medium includes all kinds of recording media in which instructions which may be decoded by a computer are stored. For example, there may be a Read Only Memory (ROM), a Random Access Memory (RAM), a magnetic tape, a magnetic disk, a flash memory, and an optical data storage device

"Non-transitory storage medium" means that the storage medium is a tangible device and does not contain a signal (e.g., electromagnetic wave), and this term includes a case in which data is semi-permanently stored in a storage medium and a case in which data is temporarily stored in a storage medium.

The method according to the various disclosed embodiments may be provided by being included in a computer program product. Computer program products may be traded between sellers and buyers as commodities. Computer program products are distributed in the form of a device-readable storage medium (e.g., compact disc read only memory (CD-ROM)), or are distributed directly or online (e.g., downloaded or uploaded) between two user devices (e.g., smartphones) through an application store (e.g., Play Store^{™}). In the case of online distribution, at least a portion of the computer program product (e.g., downloadable app) may be temporarily stored or created temporarily in a device-readable storage medium such as the manufacturer's server, the application store's server, or the relay server's memory.

While the present disclosure has been particularly described with reference to example embodiments, it should be understood by those of skilled in the art that various changes in form and details may be made without departing from the spirit and scope of the present disclosure.

## Claims

1. A display apparatus comprising:
an image display portion; and
a light source apparatus,
wherein the light source apparatus comprises:
a substrate comprising a substrate body extending along a first direction, and a plurality of substrate bars extending in a second direction from the substrate body and spaced apart from each other along the first direction;
a plurality of light sources provided on the substrate body and the plurality of substrate bars, and configured to emit light toward the image display portion;
a plurality of dimming blocks comprising at least one light source among the plurality of light sources;
a plurality of driving elements provided on only the substrate body among the substrate body and the plurality of substrate bars, and configured to drive the plurality of dimming blocks; and
a signal line formed on the substrate body and connected to the plurality of driving elements,
wherein the signal line comprises:
a data line configured to transmit a data signal to the plurality of driving elements;
a scan line configured to transmit a scan signal to the plurality of driving elements; and
a power line configured to supply power to the plurality of driving elements.

2. The display apparatus of claim 1, wherein
some of the plurality of light sources are respectively provided on the substrate body,
wherein the remainder of the plurality of light sources are respectively provided on the plurality of substrate bars.

3. The display apparatus of claim 1, wherein
each of the plurality of driving elements and the signal line is arranged along the first direction of the substrate body.

4. The display apparatus of claim 3, wherein
the plurality of driving elements is arranged to allow positions thereof in the first direction to be different from each other but some of the driving elements among the plurality of driving elements are arranged to allow positions thereof in the second direction to be different from positions of other driving elements among the plurality of driving elements.

5. The display apparatus of claim 4, wherein
the plurality of driving elements comprises:
a driving element of a first column arranged along the first direction; and
a driving element of a second column spaced apart from the driving element of the first column and arranged along the first direction,
wherein each driving element comprised in the driving element of the first column and each driving element comprised in the driving element of the second column are arranged to allow positions thereof in the second direction to be spaced apart from each other.

6. The display apparatus of claim 3, wherein
the plurality of driving elements is arranged to allow positions thereof in the first direction to be different from each other, but the plurality of driving elements is arranged to allow positions thereof in the second direction to be the same.

7. The display apparatus of claim 1, wherein:
the signal line further comprises a clock line configured to transmit a clock signal to the plurality of driving elements.

8. The display apparatus of claim 1, wherein
the plurality of dimming blocks is divided into a first group and a second group,
wherein the plurality of driving elements comprises a first driving element and a second driving element,
wherein the first driving element is configured to control first light sources comprised in dimming blocks of the first group; and
the second driving element is configured to control second light sources comprised in dimming blocks of the second group.

9. The display apparatus of claim 8, wherein
the first group comprises a first dimming block comprising first light sources connected in series among the plurality of light sources,
wherein the first light sources are provided on two adjacent substrate bars among the plurality of substrate bars.

10. The display apparatus of claim 1, wherein
the plurality of dimming blocks comprises: a first dimming block comprising first light sources connected in series to each other among the plurality of light sources; and a second dimming block comprising second light sources connected in series to each other among the plurality of light sources,
wherein each of the first dimming block and the second dimming block is provided on two adjacent substrate bars among the plurality of substrate bars.

11. The display apparatus of claim 10, further comprising:
a control line formed on the substrate and provided to electrically connecting one of the plurality of driving elements to the first dimming block and to electrically connecting one of the plurality of driving elements to the second dimming block; and
a power trace configured to supply power to the first dimming block and the second dimming block,
wherein only the control line and the power trace among the signal line, the control line, and the power trace are provided on the plurality of substrate bars.

12. The display apparatus of claim 11, wherein
the power trace comprises: a first power trace provided on a first substrate bar among two adjacent substrate bars, and a second power trace provided on a second substrate bar,
wherein the first power trace is configured to supply power to the first dimming block, and the second power trace configured to supply power to the second dimming block.

13. The display apparatus of claim 11, wherein
a width of the plurality of substrate bars is determined based on a number of traces of the control line and the power trace, and trace widths of the control line and the power trace.

14. The display apparatus of claim 1, wherein
each of the plurality of substrate bars comprises:
a central extending portion extending in the second direction different from the first direction;
a plurality of first protruding portions each protruding from one side of the central extending portion in the first direction toward an outside of the central extending portion, arranged along the second direction, and provided with some of the plurality of light sources;
a plurality of first recess portions each formed between a pair of adjacent first protruding portions among the plurality of first protruding portions;
a plurality of second protruding portions each protruding from the other side of the central extending portion in the first direction toward the outside of the central extending portion, arranged along the second direction, the plurality of second protruding portions in which others of the plurality of light sources are mounted; and
a plurality of second recess portions formed between a pair of adjacent second protruding portions among the plurality of second protruding portions,
wherein a shape of an edge of each of the plurality of first recess portions is different from a shape of an edge of each of the plurality of second protruding portions; and
a shape of an edge of each of the plurality of second recess portions is different from a shape of an edge of each of the plurality of first protruding portions.

15. A light source apparatus comprising:
a substrate comprising a substrate body extending along a first direction, and a plurality of substrate bars extending in a second direction from the substrate body and spaced apart from each other along the first direction;
a plurality of light sources provided on the substrate body and the plurality of substrate bars;
a plurality of dimming blocks comprising at least one light source among the plurality of light sources;
a plurality of driving elements provided on only the substrate body among the substrate body and the plurality of substrate bars, and configured to drive the plurality of dimming blocks; and
a signal line formed on the substrate body and connected to the plurality of driving elements,
wherein the signal line comprises:
a data line is configured to transmit a data signal to the plurality of driving elements;
a scan line is configured to transmit a scan signal to the plurality of driving elements; and
a power line is configured to supply power to the plurality of driving elements.
